(19) **Europäisches Patentamt**
**European Patent Office**
**Office européen des brevets**

(11) **EP 4 459 367 A1**

(12) **EUROPEAN PATENT APPLICATION**

(43) Date of publication:
**06.11.2024 Bulletin 2024/45**

(21) Application number: **23171575.6**

(22) Date of filing: **04.05.2023**

(51) International Patent Classification (IPC):
**G02F 1/11** *(2006.01)* **G02F 1/33** *(2006.01)*

(52) Cooperative Patent Classification (CPC):
**G02F 1/113; G02F 1/33;** G02F 1/11

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Alpine Quantum Technologies GmbH 6020 Innsbruck (AT)**

(72) Inventors:
• **Feldker, Thomas**
  **6020 Innsbruck (AT)**
• **Marciniak, Christian**
  **6020 Innsbruck (AT)**
• **Monz, Thomas**
  **6103 Reith (AT)**
• **Pogorelov, Ivan**
  **6020 Innsbruck (AT)**

(74) Representative: **Grünecker Patent- und Rechtsanwälte PartG mbB Leopoldstraße 4 80802 München (DE)**

Remarks:
Amended claims in accordance with Rule 137(2) EPC.

(54) **ACOUSTO-OPTICAL ELEMENT CALIBRATION**

(57) The present disclosure provides calibration methods for calibration of the amplitude of a simultaneous sound wave of a first frequency $f^1$ generated in an acousto-optical element (AOE) with another simultaneous sound wave of a second frequency $f^2$. The present disclosure also provides apparatuses configured to use such calibration methods to calibrate laser light, computer programs comprising instructions that cause a computer to perform such calibration methods, and computer-readable storage mediums comprising such computer programs.

In particular, a calibration method comprises obtaining a first calibrated amplitude value $a_1^1$ of a of a first non-simultaneous sound wave of the first frequency $f^1$ and a second calibrated amplitude value $a_1^2$ of a second non-simultaneous sound wave of the second frequency $f^2$. A value $a_2^{1,2}$ for calibrating the amplitude of the simultaneous sound wave of the first frequency $f^1$ is calculated in accordance with a predetermined relation between the first calibrated value $a_1^1$, the second calibrated value $a_1^2$, and the value $a_2^{1,2}$.

**Fig. 8**

**Description**

TECHNICAL FIELD

Embodiments of the present invention relate to the field of calibrating acousto-optical elements (AOEs), such as acousto-optical deflectors (AODs) and acousto-optical modulators (AOMs). In particular, the present invention relates to the calibration of the amplitude(s) of sound waves(s) generated in an AOE of an addressing unit that is used for addressing specific atom(s) among a plurality of trapped atoms.

BACKGROUND

In many technical applications (e.g. quantum computing, quantum simulations, atomic and molecular experiments, spectroscopy, atomic clocks, metrology, etc.), atoms are trapped and manipulated using laser beams. An important aspect in such applications, in particular for performing quantum computations with trapped ions, is the addressing and manipulation of two or more specific ions out of the trapped ions at the same time e.g. for the generation of an entangled state from an initially unentangled state. Often acousto-optical element(s) are used to address specific ion(s), i.e. to deflect a part of a laser beam to the position(s) of said specific ion(s).

However, small external disturbances and temporal changes in the experimental conditions (e.g. temperature variations) make it necessary to repeatedly (re-)calibrate the experimental setup. In general, the experimental parameters for manipulating a specific pair of two ions are different for each ion/qubit pair, and the number of different ion-pairs increases quadratically with the number of ions (i.e. as $(N^2 - N)/2$, where $N$ is the number of ions). Accordingly, the number of parameters to be calibrated and thus the calibration time may increase quadratically with the number of ions/qubits.

Since the quantum system (i.e. the trapped ions) is subject to decoherence due to interaction with the environment also during the calibration time, a shorter calibration is in general preferable. Furthermore, a larger calibration time decreases the duty-cycle of e.g. a quantum computer, i.e. decreases the number of computations that can be performed with the quantum computer in a given time.

SUMMARY

Accordingly, there may be need to reduce the time required for calibrating optical systems for the manipulation of trapped atoms.

The invention is defined by the independent claims. Some of the advantageous embodiments are subject matter to the dependent claims.

According to an embodiment, a calibration method is provided. The calibration method for calibrating an amplitude of a simultaneous sound wave of a first frequency $f^1$ to be generated, in an acousto-optical element included in an optical system, simultaneously with a simultaneous sound wave of a second frequency $f^2$. The optical system is configured to: (i) direct light, deflected in the acousto-optical element by a sound wave of frequency $f^1$, to a first trapped atom among $N \geq 2$ trapped atoms, and (ii) direct light, deflected in the acousto-optical element by a sound wave of frequency $f^2$, to a second trapped atom among the $N \geq 2$ trapped atoms. The calibration method comprises: (i) obtaining a first calibrated value $a_1^1$ of an amplitude of a first non-simultaneous sound wave of the first frequency $f^1$ at which a non-simultaneous Rabi-oscillation of the first trapped atom has a first predetermined frequency value $\Omega_1^1$, wherein the non-simultaneous Rabi-oscillation of the first trapped atom is induced by first light that is (a) deflected, in the acousto-optical element, by the first non-simultaneous sound wave while no sound wave of the second frequency $f^2$ is generated in the acousto-optical element, and (b) directed by the optical system to the first atom, and the first calibrated value $a_1^1$ corresponds to a predetermined amplitude of the first light before the deflection in the acousto-optical element; (ii) obtaining a second calibrated value $a_1^2$ of an amplitude of a second non-simultaneous sound wave of the second frequency $f^2$ at which a non-simultaneous Rabi-oscillation of the second trapped atom has a second predetermined frequency value $\Omega_1^2$, wherein the non-simultaneous Rabi-oscillation of the second trapped atom is induced by second light that is (a) deflected, in the acousto-optical element, by the second non-simultaneous sound wave while no sound wave of the first frequency $f^1$ is generated in the acousto-optical element, and (b) directed by the optical system to the second atom, and the second calibrated value $a_1^2$ corresponds to a predetermined amplitude of the second light before the deflection in the acousto-optical element; and (iii) calculating a value $a_2^{1,2}$ for calibrating the amplitude of the simultaneous sound wave of the first frequency $f^1$ at which a simultaneous Rabi-oscillation of the first trapped atom has a third predetermined frequency value $\Omega_2^{1,2}$, wherein the simultaneous Rabi-oscillation of the first trapped atom is induced by third light deflected in the acousto-optical element by the simultaneous sound wave of the first frequency $f^1$ and directed by the optical system to the first atom, the value $a_2^{1,2}$ corresponds to a predetermined amplitude of the third light before the deflection in the acousto-optical element, and the value $a_2^{1,2}$ is calculated in accordance with a predetermined relation between the first calibrated value $a_1^1$, the second calibrated value $a_1^2$, and the value $a_2^{1,2}$.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

Fig. 1      is a flowchart illustrating exemplary steps for calibrating the amplitudes of the light components for simultaneous Rabi-oscillation;

Fig. 2      is a block diagram illustrating an exemplary functional structure of a calibration apparatus;

Fig. 3      is a schematic drawing illustrating the dependence of diffraction angle and intensity of a diffracted beam on the frequency and intensity of a non-simultaneous sound wave generated in the addressing unit;

Fig. 4      is an illustration of an exemplary optical system and the paths of four beams directed to four respective ions;

Fig. 5      is a schematic drawing illustrating the frequency shifts caused by diffraction in the first AOD of the optical system of Fig. 4 as well as the compensation of these frequency shifts by diffraction in the second AOD of the optical system of Fig. 4;

Fig. 6      is a schematic drawing illustrating non-simultaneous addressing of a single ion by generation of a non-simultaneous sound wave in the AOE, as well as the dependence of the intensity of the diffracted beam directed to the ion on the non-simultaneous sound wave;

Fig. 7      is a schematic drawing illustrating simultaneous addressing of two ions by generation of two simultaneous sound waves in the AOE, as well as the dependencies of the intensities of the diffracted beams directed to the ions on the two simultaneous sound waves;

Fig. 8      is a schematic drawing illustrating an exemplary general scheme of the calibration process;

Fig. 9      is a schematic drawing illustrating exemplary individual parts of the static calibration;

Fig. 10     is a flowchart illustrating exemplary steps for using the static and dynamic calibration between quantum computations on the ions; and

Fig. 11     is a flowchart illustrating exemplary steps of the dynamic calibration in in ion trap quantum computer that implements 2-qubit computations using Molmer-Sorensen (MS) gates.

It is to be expressly understood, however, that the drawings are for the purpose of illustration and description only and are not intended as a definition of the limits of the disclosed subject matter. Furthermore, it is noted that identical reference signs refer to identical or at least functionally equivalent features.

DETAILED DESCRIPTION

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

It is understood that the features of the various exemplary embodiments and/or aspects described herein may be combined with each other, unless specifically noted otherwise.

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

### *Embodiments*

As mentioned above, for many technical applications, atoms are trapped and manipulated using laser beams. For example, in the field of quantum computing, trapped ions are used to represent qubits, and quantum computations are performed by irradiating the ions with appropriate laser beams (i.e. with appropriate frequency and amplitude). In a quantum computer, calculations and algorithms can be implemented and executed using quantum operations, so-called quantum gates. Typically, two basic kind of gates, 1-qubit and 2-qubit gates are considered, since a suitable combination of these gates enables the computation of arbitrary algorithms.

The optical system used to direct laser light to particular atom(s) often includes an acousto-optical element (AOE), in which light is deflected using sound waves. Typically, sound waves with RF-frequencies are used, but the present invention is in general not limited to any particular frequencies of the sound waves.

The optical system may further include optical elements other than said AOE (these further optical elements may include further/other AOE(s)). These other elements may be used/configured to direct light deflected in the AOE in a particular direction to a trapped atom that corresponds to said particular direction. More specifically, in order to manipulate a particular atom, light may be input to the optical system and a sound wave of a particular frequency, corresponding to said particular atom, may be generated in the AOE. When the light input to the optical system enters the AOE, the input light scatters with the sound wave thereby deflecting the light in particular directions, which depend on the frequency of the sound wave (a plurality of deflected beams with different directions is generated since the light entering the AOE is diffracted into different diffraction orders). One of the deflected light beams may then be directed by the optical system to the particular atom. When two or more trapped atoms are to be manipulated at the same time, two or more sound waves with (different) frequencies corresponding to these two or more trapped atoms may be generated at the same time in the AOE.

In general, the intensity and/or amplitude of the light diffracted by a sound wave depends on the intensity of the sound wave. When two (or more) sound waves are generated in the AOE at the same time, since the AOE is typically operated in the non-linear regime, the intensity of light diffracted by one of the sound waves also depends non-trivially on the intensity and frequency of the other sound wave(s) also generated at said time in the AOE. Furthermore, individual atoms may couple differently to various motional modes and/or the employed laser may couple differently to each atom.

Accordingly, the amplitudes of the sound waves to be generated in the AOE for manipulating an atom pair (in a specific way, in particular with light of a particular intensity) depends in general on the atom pair to be manipulated. Since the number of parameters to be calibrated thus grows quadratically with the number N of trapped atoms, the calibration of the sound waves for each atom pair manipulation may thus require a lot of time.

For instance, in an ion-trap quantum computer comprising N qubits in a register with all-to-all connectivity, there are $(N^2-N)/2$ possible 2-qubit gates that can be implemented. On a register of e.g. N=30 ions, 2-qubit gates can thus be implemented on 435 different qubit pairs. As explained above, the experimental parameters to implement a 2-qubit gate are usually different for each of these 435 qubit pairs. Therefore, the calibration of the 2-qubit gates for all possible qubit pairs may require a lot of time, which in turn would severely reduce the uptime or duty-cycle of the quantum computer. Typically schemes for efficient calibration of 2-qubit (or multi-qubit) operations thus often rely on finding the correct time intervals for calibration and/or on calibration of only the required operations in order to reduce the calibration overhead.

Here it should be noted that the present disclosure may sometimes refer to trapped ions rather than to the more general case of trapped atoms (which may be charged or not charged), unless context indicates otherwise. This is merely as a typical example used here: ions are usually easier to trap than uncharged atoms, and many applications often use trapped ions rather than trapped uncharged atoms for this or another reason. However, the particular method to trap the ions or uncharged atoms is not important for the present invention, which is related to the calibration of the optical system used to direct laser light with a particular strength to trapped atoms, e.g. with a strength (i.e. amplitude/power) that causes Rabi-oscillations of the trapped atoms with predetermined frequencies. Thus, the present disclosure applies to uncharged trapped atoms in the same way as to charged trapped atoms or ions. In other words, whenever it is referred to atom(s) or to ion(s), the respective statement is to be understood to apply to atom(s) and, in particular to ion(s), as well as to any other charged particle, like electrons, protons, anti-protons, nano-spheres. Furthermore, it is in general not necessary that all atoms/ions/charged particles are identical and have the exact same laser-frequency to use the calibration methods of the present disclosure to calibrate the interaction-strength (corresponding to the Rabi-Frequency for atoms/ions) of the laser light with the atoms/ions/charged particles.

Furthermore, it is to be noted that the calibration methods (and the corresponding apparatuses performing such methods) of the present disclosure can in particular be used to tune-up 2-qubit or entangling gates in ion-trap quantum computers, in particular in case of ion traps with cross dependencies in the control channels. Here, tuning-up refers to methods to find appropriate experimental parameters and settings in order to implement the desired 2-qubit gate, and the control-channel refer to the control of the different ions. Cross-dependencies in the control channels thus means e.g. that an operation performed on one ion influences the operation on another ion if these operations are performed on the two ions simultaneously. As a consequence, the calibration values for single-ion operations cannot be directly applied to simultaneous operations and multi-qubit operations may have to be calibrated separately.

However, quantum computation and in particular the implementation of a 2-qubit gate via the simultaneous Rabi-oscillation of two trapped atoms is merely used as an illustrative example. The calibration methods of the present disclosure are not limited to 2-qubit gates (i.e. they may also be used to calibrate 3-qubit gates as well as gates involving more than 3 qubits) as well as to other field in which the trapped atoms are not used to implement a quantum computer, such as metrology applications where e.g. Rabi-oscillation of two or more trapped atoms of a same register (e.g. on atoms tapped in the same trap) with respective predetermined Rabi-frequencies are to be induced at the same time.

In particular, the calibration methods of the present disclosure can be applied, but are not limited to, an ion-trap quantum computer in which 2-qubit gates are implemented as Molmer-Sorensen (MS) gates. In general, the here mentioned procedure applies to almost all 2-qubit implementations in ion trap quantum computers that utilize the motional modes as communication bus, expect for minor adaptations between different gate schemes. The parameters that are to be calibrated for 2-qubit gates typically are:

- alignment of addressed foci to ions (i.e. calibration/determination of frequencies $f^i$ and calibration of optical system to direct to the respective ion);
- Rabi frequency per ion (usually need to be equal on all ions for single qubit operations and needs to be equal on all ions for two (or multi) qubit operations);
- Qubit transition frequency per ion needs may have to be fixed;
- COM mode frequency (or more general mode spectrum) may have to be fixed; and
- Stark shift for each qubit per operation (can be compensated in advanced gate schemes).

In general, the calibration measurements may be divided into scans, wherein a scan contains a preparation part and one or more scan points, where each scan point may include:

(i) a preparation part (including e.g. initialization of all qubits in a predefined state),
(ii) performing sequentially on all ions the operations corresponding to the scan point, and
(iii) a detection part or measurement part in which the final states of all ions are determined.

As part of one scan, a scan point, i.e. the above steps (i), (ii) and (iii) of the respective scan, may be repeated a certain number of times. For instance, a typical scan for measuring the single-ion Rabi frequencies (as part of the dynamic calibration described below) may include 10-25 scan points with 50 repetitions each (e.g. for a register size of $3 \leq N \leq 50$ ).

Because there is no ion-ion interaction in the above calibrations, each of these calibrations can be done with a fixed number of scans (in principle 1, but for reasons like crosstalk it makes usually sense to split it in 2 or 3) and the number of laser-ion interactions grows only linearly with the register size N.

More specifically, the number of scan points and the number of repetitions of each scan point may stay constant with growing register size. The number of gates grows linearly and thus the number of laser-ion interactions, performed in part (ii) of a scan point, grows linearly.

The number of ions measured in the detection part (iii) also grows linearly. However, since measurements on different ions may usually be performed in parallel, additional ion measurements may have no substantial impact on the time budget.

In general, more scans are expensive in the time budget due to control overhead of the preparation of the scan. The entire overhead of a scan (including the scan preparation, the scan point preparations (i) and read out/measurements (iii) of the scans) may cost more than 80% of the time for simple calibration sequences, i.e. for calibration sequences where the operations in the parts (ii) of the scan points can be performed in a comparably short time (e.g. with only a few laser-ion interactions).

More scan points/repetitions are less expensive but still there is a lot of overhead like additional cooling and additional detection. More laser-qubit interactions on the other hand cost typically very little time. E.g. if we consider a 20 qubit register and 10 single-qubit gates per qubit, the 200 single-qubit gates take about 3-5ms. The cooling and detection overhead per sequence (i.e. per repetition of the scan points) may e.g. be 10ms (however, the values may heavily depend on the particular hardware).

If all addressing channels would be completely independent of each other, these calibration measurements would completely characterize the system and thus be sufficient for any kind of simultaneous laser-ion interaction on multiple qubits, particularly ion-ion entanglement. In most physical systems used for quantum computing, the individual channels are not independent, but there exist some cross dependencies for the qubit control on different ions. For instance, if a second (or more) rf-tones are applied to the AOD, this will influence the amount of light going into the first tone, even if we do not change the amplitude of that one. Similar effects may occur in other systems like multi-channel AOMs. Even optical crosstalk at the ion could be treated in the same way.

In particular in view of the above, according to an embodiment, a calibration method for calibrating an amplitude of a 2-simultaneous sound wave of frequency $f^1$ is provided. More specifically, as further explained below:

- the 2-simultaneous sound wave of the first frequency $f^1$ is to be generated, in an acousto-optical element (AOE), simultaneously with a 1-simultaneous sound wave of a second frequency $f^2$;
- the non-simultaneous sound waves of the first frequency $f^1$ and the second frequency $f^2$ are to be generated in the AOE while no other sound wave is generated in the AOE; and
- the AOE is included in an optical system for directing light deflected in the AOE by a sound wave of frequencies $f^1$ and $f^2$ to a first and a second trapped atom, respectively.

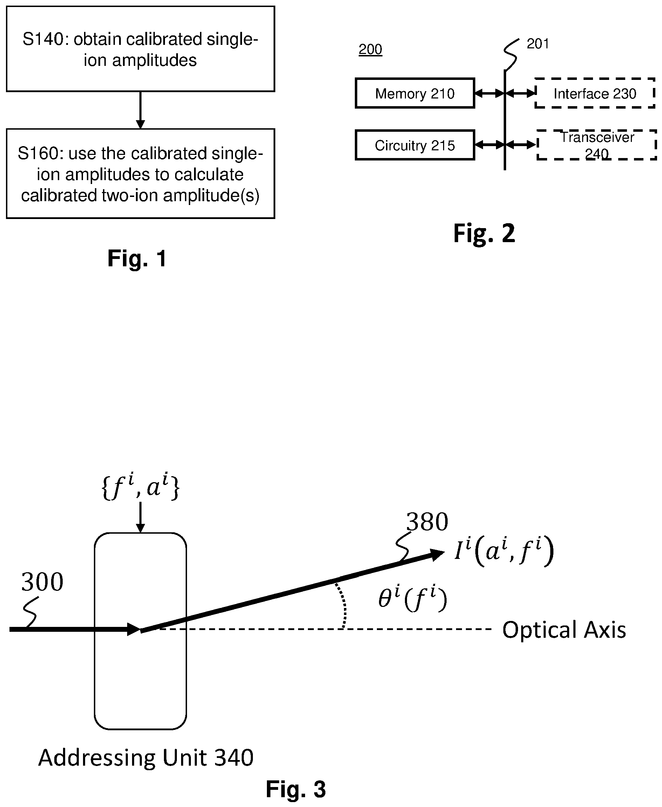

As illustrated in **Fig. 1**, the method comprises the steps of: obtaining S140 calibrated values $a_1^1$ and $a_1^2$ of amplitudes of two non-simultaneous sound waves of frequencies $f^1$ and $f^2$, respectively; and calculating S160, in accordance with a predetermined relation between the first calibrated value $a_1^1$, the second calibrated value $a_1^2$, and the value $a_2^{1,2}$, a value $a_2^{1,2}$ for calibrating the amplitude of the 2-simultaneous sound wave of the first frequency $f^1$.

According to another embodiment, in accordance with the calibration method provided above, an apparatus for calibrating an amplitude of 2-simultaneous sound wave of the first frequency $f^1$ is provided. As illustrated in **Fig. 2**, the apparatus 200 comprises circuitry 215 configured to: obtain calibrated single-ion amplitudes $a_1^1$ and $a_1^2$; and calculate, in accordance with a predetermined relation between the first calibrated value $a_1^1$, the second calibrated value $a_1^2$, and the value $a_2^{1,2}$, a value $a_2^{1,2}$ for calibrating the amplitude of the 2-simultaneous sound wave of the first frequency $f^1$.

According to another embodiment, a computer program comprising instructions is provided. When the program is executed by a computer, the computer program causes the computer to carry out the steps of any calibration method according to the present disclosure. Furthermore, according to another embodiment, a computer-readable storage medium comprising any such computer program is provided.

Further details of the embodiments are explained below.

***Calibration Apparatus***

In general, the calibration apparatus may be implemented by any hardware means. In particular, it may be (part of) a computing device or any other suitable device. For instance, the calibration apparatus can be implemented using a general purpose processor, as a micro-controller, by means of a programmable hardware such as field programmable gate array (FPGA) or as a specialized hardware such as an application-specific integrated circuit (ASIC). Any combination of the above-mentioned hardware and possibly a software may be used.

**Fig. 2** shows an exemplary structure of the calibration apparatus 200. As shown, the calibration apparatus 200 may include a memory 210, circuitry 215, user interface 230, a transceiver 240, and a bus 201.

The memory 210 may store one or more program(s), which may be executed by the circuitry 215 to perform steps of any of the calibration methods and/or the other functions described herein. The transceiver 240 may be wireless and/or may be configured to receive and/or transmit (controlling) signals. The user interface 230 may be for displaying messages or the status of the device, or the like and/or for receiving a user's input. The bus 201 may interconnect the memory, the processing circuitry, the transceiver, and the user interface.

Circuitry 215 (or processing circuitry) may comprise one or more processors and/or other dedicated or programmable hardware. Circuitry 215 performs in particular the calculation of the simultaneous sound waves. Circuitry 215 may obtain the calibrated single-ion amplitudes over an interface (which may be a non-user interface) or may calculate the single-ion amplitudes based on other input such as measurement results obtained during the dynamic single-ion calibration.

In general, circuitry 215 may be or be part of a controller, which may include other hardware and/or software for controlling laser(s) and/or other parts of the optical system. In particular, circuitry 215 may be configured to control (i) the optical system and/or a laser generating the input light during and outside of calibrations, (ii) amplitudes and/or frequencies of sound waves for performing the dynamic and/or static calibration measurements, and/or (iii) control the AOE of the addressing unit to generate non-simultaneous sound waves with the obtained single-ion amplitudes and simultaneous sound waves with the calculated ion-pair amplitudes outside of calibration operations in accordance with manipulations to be performed on the ions.

For instance, such a controller may be configured to receive input of a particular unitary operation that is to be performed on the trapped ions, to determine the properties of laser beams that implement said unitary operation (this may be a sequence of laser beams, i.e. the controller may first decompose the received unitary operation into a sequence of predetermined universal gate operations and then perform said sequence), and to then control the laser beam unit/laser beams accordingly and the optical system, in particular the addressing unit accordingly.

In general, the controlling performed by the controller and/or the circuitry 215 may be performed be generating control signals and transmitting them via an interface to the respective other apparatus (laser, optical system, AOE).

### *Optical System*

In general, the term *"optical system"* refers to an apparatus comprising optical elements (e.g. lenses, acousto-optical modulators and the like) used to direct laser light to the trapped ions. More specifically, the optical system can be used to direct, at a given time, light to one or more specific ions. These atoms/ions to which light is directed are also referred to as *"addressed atoms/ions".* In other words, at a given time, part of the input light entering the optical system is directed (only) to each addressed ion, but not to ions other than the addressed ions.

In general, the ion(s) to which light is directed, at a given time, may be freely selected out of $N > 2$ trapped ions. Here it should be noted that $N$ may be the number of atoms/ions trapped in the trap, but there may also be more than said $N$ trapped atoms/ions trapped in the trap which are not, at least directly (motional modes may still confer an indirect manipulation), to be manipulated with the laser beams. In other words, $N$ may be the number of atoms/ions in a predetermined subset of (all) the trapped atoms/ions.

The optical system in general includes an optical elements (AOE), such as Acousto Optical Deflector (AOD) or an Acousto Optical Modulator (AOM). An AOE uses an acousto-optic effect to diffract/deflect light entering the optical system/AOE (here also referred to as input light). More specifically, one or more sound waves can be generated in the AOE. The light input to the optical system is then diffracted (or deflected) in the AOE by these one or more sound waves. In general, for each sound wave of a particular frequency, a plurality of diffracted laser beams corresponding to different *"orders of diffraction"* is generated from the input light.

In general, the directions of the diffracted beams, i.e. the (diffraction) angles between the undeflected laser beam and a particular deflected beam, depend on the frequency or frequencies of the one or more sound waves generated the time of diffraction in the AOE. The optical system is configured to direct light deflected in the AOE in a particular direction, i.e. light deflected with a particular diffraction angle, to a specific ion. More specifically, for each of the $N \geq 2$ trapped ions, there is a corresponding diffraction angle $\theta^i$, where $i$ is an index labelling the individual trapped ions (e.g., as in general assumed here, an integer with $1 \leq i \leq N$). Light deflected in the AOE with the angle $\theta^i$ is thus directed to the $i$-th ion.

Furthermore, for each of the $N \geq 2$ trapped ions, there is a corresponding sound wave frequency $f^i$. That is, the optical system is configured (for each $i \in \{1, 2, 3, ..., N\}$) to direct light, deflected in the AOE by a sound wave of frequency $f^i$, to the $i$-th trapped atom among the $N$ trapped atoms. More specifically, when a sound wave of frequency $f^i$ is generated in the AOE, part of the input light is deflected in the AOE with angle $\theta^i$ and then directed to the j-th ion. For instance, the optical system is configured to: (i) direct light, deflected in the AOE by a sound wave of frequency $f^1$, to a first trapped atom among $N \geq 2$ trapped atoms, and (ii) direct light, deflected in the AOE by a sound wave of frequency $f^2$, to a second trapped atom among the $N \geq 2$ trapped atoms.

The atoms to which light is directed is thus determined by the frequencies of the sound waves generated in the AOE. Specific atoms can thus be addressed (i.e. light can be directed to them) by generating sound waves of the frequencies corresponding to these specific atoms. In general, the frequencies $f^i$ are thus given by the atoms that are to be addressed. The part of the optical system, which in particular includes the above-mentioned AOE, is thus also referred to as *"addressing unit"*.

This is schematically illustrated in **Fig. 3**. As illustrated, the input parameters for the addressing unit 340 are the frequency or frequencies $f^i$ of the sound waves to sound wave(s) to be generated and the corresponding amplitude(s) $a^i$ of the sound wave(s). In the present example, one sound wave with frequency $f^i$ and amplitude $a^i$ is generated in the AOE. Part of the input light 300 entering the addressing unit 340 is then deflected in the addressing unit 340 by said sound wave by an angle $\theta$ with respect to the angle with which the input light 300 enters the AOE. As indicated, the angle $\theta$ between the input light and the deflected beam 380 depends, usually in good approximation, only on the frequency $f^i$ of the sound wave (and the frequency of the input light), but not on the amplitude $a^i$ of said sound wave. As also illustrated the amplitude of the deflected beam 380 in general depends on both the frequency $f^i$ and the amplitude $a^i$ of the sound wave (as well as the amplitude of the input light 300). It is noted Fig. 3 only one of the deflected beams is explicitly shown. As mentioned above, in general there is a plurality of diffracted beams due to the sound wave of frequency $f^i$ as well as the undeflected beam of zeroth diffraction order.

In general, the frequencies $f^i$ may be mutually different, i.e. there may be N mutually different sound waves, wherein each of the frequencies $f^i$ corresponds to (only) one of the trapped ions. In other words, light deflected by a sound wave of frequency $f^i$ is directed to the j-th ion, and to no other ion than the *i*-th ion. Thus, in general, for each addressed ion a sound wave of the frequency corresponding to said ion is generated in an AOE.

Here it is to be noted that not all of the light deflected by the sound wave of frequency $f^i$ is directed to the *i*-th ion. More specifically, only light of particular diffraction order due diffraction with the sound wave of frequency $f^i$ may be directed to the *i*-th ion. Usually only a single beam of the beams deflected by the sound wave of frequency $f^i$ is directed to the j-th ion.

For instance, the deflected beams generated by a single phonon interaction, i.e. the either the beam whose frequency is shifted in the AOE by $+f^i$ or the beam whose frequency is shifted in the AOE by $-f^i$ with respect to the frequency of the input beam may be directed to the *i*-th ion.

However, the present invention is not limited thereto as in general the optical system may directed a deflected beam of any diffraction order (other than the zeroth order) to the j-th ion. In general, the other beams due to deflection with the sound wave of frequency $f^i$, i.e. those diffraction order not directed to the *i*-th ion, may be directed to none of the $N \geq 2$ trapped ion. Regarding this, it is noted that, in the present disclosure, these other deflected beams are often not explicitly mentioned. In other words, for the sake of readability and clarity, the term *"deflected beam(s)"* usually (unless context indicates otherwise) refers to that deflected beam(s) that is/are directed by the optical system to the respective ion(s). Furthermore, the deflected beam that is to be directed to the *i*-th ion is referred to as *i*-th deflected beam.

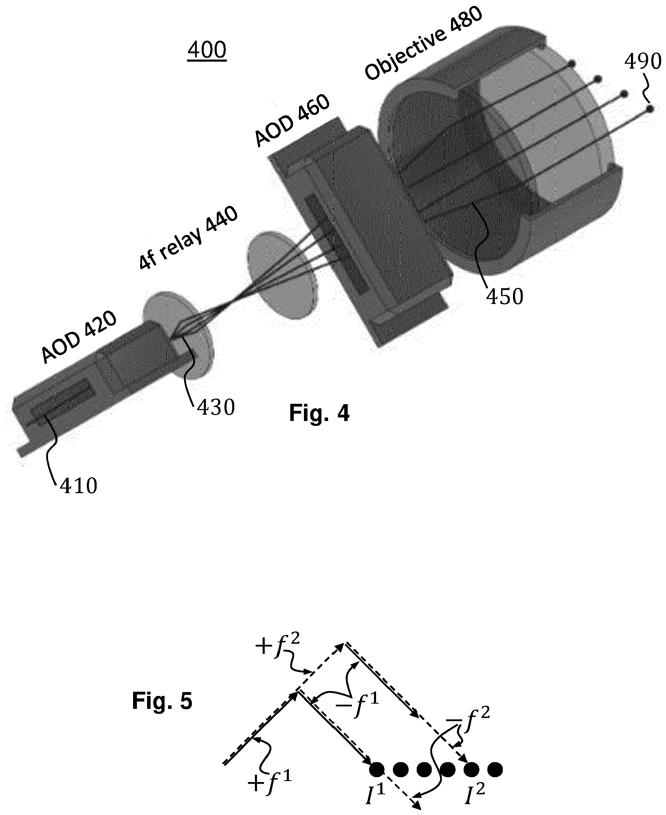

Furthermore, it is to be noted that in general only part of a deflected beam may be directed to the respective ion. For instance, as further explained below with reference to Fig. 4, the deflected beam may be split in a second AOE and one of those deflected beams may be directed to the respective ion.

### *Reduction of Frequency Shift*

A specific example of an optical system or part of an optical system is illustrated in **Fig. 4.** The optical system 400 includes a first AOD 420, a 4f relay 440, an AOD 460, and an objective 480. The first AOD 420 corresponds to the AOE described above and thus represents the addressing unit of the optical system 400.

More specifically, the input light 410, which is a single beam, enters the first AOD 420. Here it is exemplarily assumed that four different ions 490 are to be addressed at the same time. Thus, four sound waves with different frequencies are generated in the AOD 420. The input light 410 is thus split in the AOD 420 into a plurality of beams. Four of these beams are the deflected beams 430, (part of) which the optical system directs to the four addressed ions 490, respectively.

After passing the 4f relay (essentially two lenses as illustrated in Fig. 4), the four deflected beams enter the second AOD 460, in which each of the deflected beams 430 is diffracted again. In the second AOD 460, sound waves with the same frequencies as the sound waves generated in the first AOD 420 are generated. Each of the deflected beams 430 is thus split in the second AOD 460 into a plurality beams, one of which is directed to the respective ion 490. More specifically, one of the beams generated in the second AOD 460 by diffracting the *i*-th deflected beam with the sound wave of frequency $f^i$ is directed to the j-th ion. In the example of Fig. 4, there are thus four such deflected beams 450 leaving the second AOD 460 that the optical system directs, via the objective 480, to the four addressed ions 490, respectively. In reality, each of the N beams entering the AOD 460 may be split into M outgoing beams (at first diffraction order, and assuming that the second AOD generated only diffracted beams of positive diffraction order or only of negative diffraction order), resulting in N*M outgoing beams in total. Typically, N=M and therefore in this particular example there are N=4 beams entering in the second AOD 460 and hence 16 outgoing beams, but only 4 of them are frequency-compensated (the ones which are horizontally aligned and directed to the ions). One could interpret this picture in two ways:

- The 4 individual beam paths are shown, when the ions are addressed sequentially in time (always only one frequency is applied to the AODs at a time).
- There are 4 frequencies send simultaneously to the AODs and the 12 uncompensated outgoing beams are not depicted for simplicity.

The optical system may make the deflection and generation of the individual laser beams independent from the frequency of the input light. More specifically, the optical system 400 may allow to reduce the frequency shift of the deflected beam(s), which is caused by the diffraction in the AOE 420 of the addressing unit. More specifically, a deflected beam generated in the AOE of the addressing unit is in general shifted by an integer multiple of the frequency of the deflecting sound wave. Since the sound waves in the second AOD have the same frequencies as the sound waves in the first AOD, each of the deflected beams leaving the first AOD will be diffracted in the second AOD such that one of its diffracted beams as a zero frequency shift with respect to the input beam. The second AOD may thus be used to compensate the frequency shift of the first AOD.

For instance, as illustrated in **Fig. 5,** the frequency of the laser beam directed to the first ion is shifted in total by $f^1$ - $f^1$ and the laser beam directed to the second ion is shifted in total by $f^2$ - $f^2$. More specifically, the arrows in Fig. 5 represent the momentum transfer from the AOD to the Photons of the laser beams. The momentum transfers by $\pm f^1$ are illustrated by solid arrows, and the momentum transfers by $\pm f^2$ are illustrated by dashed arrows. It is further noted that the momentum shift by $+f^2$ in the first AOE and the momentum shift by $-f^2$ in the second AOE are drawn slightly displaced with respect to the momentum shifts by $\pm f^1$ merely for illustrational purposes to increase visibility. In Fig. 5, it is further assumed that the first AOD only generates diffraction beams with increased frequency (i.e. $+f^1$ or $+f^2$) and the second AOD only diffraction beams with a reduced frequency (i.e. $-f^1$ or $f^2$).

The momentum transfers are transversal/perpendicular to the propagation direction of the light, which is thus perpendicular to the drawing plane (i.e. the light goes into or out of Fig. 5). Furthermore, the momentum transfers in the first and second AOD are also perpendicular to each other in accordance with the illustration in Fig. 4, in which the AOD 420 and AOD 460 are rotated with respect to each other by 90°.

As described above, there are thus 4 beams leaving the second AOD:

- two beams with a compensated frequency shift directed to the two ions (i.e. the "$f^1$ - $f^1$" and the "$f^2$ - $f^2$" beam). It is noted that only the frequency/energy shift is compensated by the second AOE in these beams. Since the two AODs are rotated by 90°, they still have a momentum shift with respect to the original beam that is perpendicular to the propagation direction of the original beam; and
- two beams with a total frequency and momentum-direction shift (i.e. the "$f^1$ - $f^2$" and the "$f^1$ - $f^2$" beam). As indicated in Fig. 5, these beams are not directed to any ion.

Thus, both atoms can easily be illuminated/irradiated at the same time with light of the same frequency, simply be inputting light of this frequency to the optical system and generating sound waves with the respective frequencies in the two AODs.

Furthermore, the optical system 400 may allow to use the same sound wave frequency $f^i$ to direct (part of) the input light to the $i$-th atom independent of the frequency or frequencies of the input light. More specifically, the deflection angle in an AOE in general depends on both the frequency of the light and the frequency of the sound wave deflecting the light. However, for typical applications, the frequency differences (typically in the MHz-GHz range) between input light is negligible in comparison with the carrier frequency (typically THz range) of the input light. In a good approximation, the deflection angle does then depend only on the frequency of the sound wave (but not on the particular frequency of the input light).

As can also be seen in **Fig. 4,** the direction of deflected beam when leaving the AOE (in particular when leaving the AOE of the addressing unit) may not be the direction of the respective to which it is directed by the optical system. Usually, the direction of the beam(s) leaving the AOE may further be changed by other optical elements (e.g. of the optical system) located after the AOE. For instance, as illustrated in Fig. 4, after the addressing unit, there may be another AOE and/or an objective that changes the direction of the laser beams leaving the addressing unit to be parallel with respect to each other (but with a spatial displacement perpendicular to the common propagation direction).

It is further noted that the amplitudes of the sound waves generated in the second AOD 460 may be identical with the amplitudes of the respective sound waves generated in the first AOD 420 (i.e. the amplitudes of the sound waves of frequency $f^i$ generated in the first and the second AOD may be identical). This may be suitable in particular when the first and second AOD are structurally identical. However, the present invention is not limited thereto as the amplitudes used for second AOD may be different from the amplitudes used in the first AOD and/or the second AOD may be calibrated independently from the calibration of the first AOD.

*Ion Manipulation - Rabi Frequencies*

As explained above, the optical system is used to direct light to one or more specific ions, also referred to as addressed ions. The light, usually laser light, directed to the ions is used to manipulate the ions. In particular, the quantum mechanical state of the addressed ions may be changed e.g. in order perform quantum computations.

Usually, operation/manipulation are performed on one or more ions by exciting one or more specific transitions between states of the ion(s). To excite a particular transition, the light illuminating the ion has to include light of a frequency corresponding to the energy difference between the two states. It is noted that the frequency does not have to be equal to the energy difference. In particular two-qubit operations (also known as two qubit gates) are implemented by using light (slightly) detuned from the transition(s) to be excited. Some one-qubit gates, e.g. Z-gates, may also be implemented using detuned light and induce an AC-Stark shift. However, Z-gates are typically done virtually by adding a phase to the X-/Y-gates. One-qubit gates such as X- and Y- gates, on the other hand, are usually implemented without detuning by exciting a Rabi-oscillation between the two ion states of the respective ion that are used to represent the qubit.

In general, the Rabi-frequency with which an atom oscillates when illuminated with light depends on the amplitude, the intensity, and/or the frequency of said light. The operation/manipulation performed on the ion(s) thus depends on the amplitude of the light illuminating the ions, the frequency or frequencies of the beam(s) directed to the ion(s), and/or the duration of the illumination.

In general, it may depend on the used quantum gates whether resonant or non-resonant light is used for inducing the Rabi oscillations for the calibration measurement in the dynamic and/or when performing the quantum operations. The present disclosure is not limited to resonant or non-resonant Rabi oscillations. Thus, the Rabi oscillations may be induced by resonant light, i.e. by light with photon energy corresponding/identical to the energy difference of the two states of the respective Rabi oscillation, or may be induced by non-resonant or detuned light.

For instance, for X-/Y- gates typically resonant light is used. Z-gates, on the other hand, may be implemented by using detuned (i.e. non-resonant) light and inducing an AC-Stark shift, but also virtually by adding a phase to the X-/Y-gates. In general, the non-resonant light may also be used when exciting a Raman transition using two or more laser beams (this may require multiple addressing units that allow ion illumination from different directions).

It is further noted that, when performing ion manipulation(s) (e.g. quantum computations), the amplitude and/or intensity of the input light may in general be time-dependent and take various (time-)shapes like a rectangular, a Blackman or another arbitrary (but predetermined) wave form. When using time-dependent input light, the corresponding Rabi frequency induced by such light may also be time-dependent during an ion manipulation. Regarding this, it is pointed out that the calibration methods disclosed herein are not limited to any particular wave form (e.g. time and/or space-dependency) of the input light during the ion manipulations for which the calibration is performed. In particular, the input light used for performing calibration measurements may have a different wave form (e.g. time and/or space-dependency) than the waveform of the input light to be used in the ion manipulations for which the calibration is performed.

*Single-ion Operations*

When, at a given time, only (a single/exactly) one of the trapped ions is to be manipulated, the operation/manipulation to be performed is referred to as *"single-ion operation/manipulation"* (or also *"single-qubit operation"*). In other words, in case of a single-ion operation, there is only one addressed ion. Thus, since the optical system is used to direct light to only one trapped ion, only one sound wave is generated in the AOE. Since there are no other sound waves generated in the AOE at the same time as this sound wave, such sound wave is here also referred to as *"non-simultaneous sound wave"*. In other words, a non-simultaneous sound wave is generated in the AOE while no other sound wave is generated in the AOE. Here it is further to be noted that, in the present disclosure, the non-simultaneous sound wave of frequency $f^j$ is also referred to as j-th non-simultaneous sound wave.

A non-simultaneous sound wave is generated with the frequency corresponding to the one addressed ion. For instance, when just the j-th trapped atom is to be manipulated, only a sound wave of frequency $f^j$ is generated in the AOE.

Furthermore, since no other ion is oscillating simultaneously (at the same time) as the addressed ion of a single-ion operation, the Rabi-oscillation that is performed by said addressed ion is referred to as a *"non-simultaneous Rabi-oscillation"*. In particular, the non-simultaneous Rabi-oscillation (also referred to as single-ion Rabi-oscillation) of the j-th trapped atom is induced by light:

- (i) deflected, in the AOE, by a non-simultaneous sound wave of frequency $f^j$, and
- (ii) directed by the optical system to the *i*-th atom.

The amplitudes of the non-simultaneous sound wave amplitudes are also referred to as single-ion amplitudes $a_1^i$.

For instance, the non-simultaneous Rabi-oscillation of the first trapped atom (i.e. the $i = 1$ ion) is a Rabi-oscillation induced by light: (i) deflected, in the AOE, by a non-simultaneous sound wave of frequency $f^1$, and (ii) directed by the optical system to the first trapped atom. Furthermore, the non-simultaneous Rabi-oscillation of the second trapped atom (i.e. the $i = 2$ ion) is induced by light: (i) deflected, in the AOE, by a non-simultaneous sound wave of frequency $f^2$, and (ii) directed by the optical system to the second trapped atom.

The non-simultaneous Rabi-oscillation of the $i$-th trapped atom is an oscillation between two predetermined (internal) states of the j-th trapped atom. The determination/selection of these two states in general depends on the technical application, and the present invention does not depend on a particular method to select these states. In general, the frequency of the input light corresponds to the energy difference between the two states of the oscillation and/or the particular type pf quantum gate to be implemented by the operation. In particular, the frequency of the input light used for a single-ion operations may be resonant, i.e. may substantially identical with the energy difference between the two states of the respective Rabi-oscillation.

As mentioned above, the Rabi-frequency with which the $i$-th atom oscillates between two states depends also on the amplitude of the light with which the $i$-th atom is irradiated and, thus, on the deflected directed to the $i$-th atom. In the case that a non-simultaneous sound wave of frequency $f^i$ is generated in the AOE, the amplitude of light deflected by said sound wave usually depends, to first order, on the amplitude of said non-simultaneous sound wave and the amplitude of the input light. Thus, when input light with a particular amplitude/intensity is input to the addressing unit, the intensity $I^i\left(a_1^i, f^i\right)$ of the light deflected by a non-simultaneous sound wave in a particular direction depends, to first order, (only) on the amplitude $a_1^i$ of the sound wave and only to higher order on the frequency $f^i$ (e.g. depending on saturation).

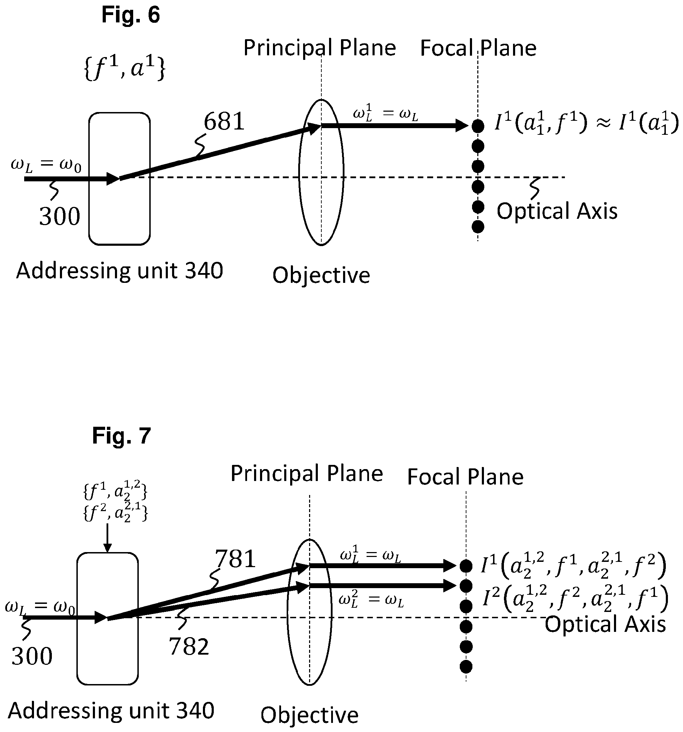

As an example, the non-simultaneous addressing of one ion is illustrated in **Fig. 6**. More specifically, for the operation on the first ion, one sound wave with amplitude $a_1^1$ and frequency $f^1$ is generated in the addressing unit 340. The input beam 300 is diffracted by the sound wave, whereby the deflected beam 681, directed to the first ion, is generated. As illustrated the intensity of the deflected beam 681 depends, for a given intensity of the input light, (approximately) only on the amplitude $a_1^i$ of the non-simultaneous sound wave. Furthermore, it is assumed that the addressing unit 340 does not change the frequency $\omega_L = \omega_0$ of the input light 300 e.g. by using an addressing unit as discussed with respect to Fig. 4. Thus, the frequency $\omega_L^1$ of the diffracted beam 681 is the same as the frequency $\omega_L = \omega_0$ of the input light 300.

### Ion-pair Operations

When, at a given time, two trapped ions are to be manipulated, the operation/manipulation to be performed is referred to as *"ion-pair operation/manipulation"* (or also *"two-qubit operation"*). In other words, in case of an ion-pair operation, there are (exactly) two addressed ions. Thus, since the optical system is used to direct light to these tow ions, two sound wave with different frequencies are generated in the AOE. Accordingly, since these two sound waves are generated at the same time (i.e. simultaneously) in the AOE, they are here both referred to as *"simultaneous sound wave"*. In other words, a simultaneous sound wave is generated in the AOE while another (also simultaneous) sound wave is generated in the AOE. For instance, in the case of two sound waves with different frequencies, this leads to the generation of a dynamic lattice in the AOE, on which the input light is deflected. The deflected beams to be directed to the two addressed ions are generated/split in the AOE from the same input beam.

It is noted that the term *"ion-pair operation/manipulation"* thus refers to a direct manipulation of two atoms, i.e. a manipulation in which only two ions are illuminated with light. However, this does not exclude that other ions than the two addressed ions are indirectly manipulated by the ion-pair operation. For instance, an ion-pair operation may be used to excite a motional mode in which more than the two addressed ions are oscillating (e.g. the center of mass mode).

The simultaneous sound waves are generated with the frequencies corresponding to the two addressed ions. For instance, when the j-th and the $i$-th trapped atom are to be manipulated, a sound wave of frequency $f^i$ and a sound wave of frequency $f^j$ are (simultaneously) generated in the AOE. That is, in a good approximation, the frequencies $f^i$ used for ingle-ion operations may also be used to address multiple ions at the same time. In other words, the frequencies $f^i$ are (in a first approximation) independent of whether one, two or more than two ions are to be addressed at the same time.

Furthermore, since the two addressed ions are oscillating simultaneously (at the same time), the Rabi-oscillation that are performed by the two addressed ions of an ion-pair operation are referred to as *"simultaneous Rabi-oscillations"*. In general, since there are N-1 ion pairs including a particular ion, there are N-1 simultaneous Rabi-oscillations including a particular ion. Furthermore, there are (N^2-N)/2 different ion pairs, and thus there are (N^2-N) different simultaneous Rabi-oscillations. In the present disclosure, these different simultaneous Rabi-oscillation are denoted as follows: The *j*-simultaneous Rabi-oscillation of the *i*-th trapped atom is the Rabi-oscillation induced by light:

- (i) deflected, in the AOE, by a *j*-simultaneous sound wave of frequency $f^i$, and
- (ii) directed by the optical system to the *i*-th ion.

It is further noted that, for each *j*, *i* ∈ {1, 2, 3, ..., N}), the amplitudes of the *j*-simultaneous sound wave of frequency $f^i$ is referred to as ion-pair amplitude $a_2^{i,j}$.

Here the *j*-simultaneous sound wave of the frequency $f^i$ refers to a sound wave generated, in the AOE, simultaneously with an sound wave of the frequency $f^j$. This sound wave of the frequency $f^j$ is referred to as the *i*-simultaneous wave of the frequency $f^j$. Thus, the *j*-simultaneous sound wave of the frequency $f^i$ and the *i*-simultaneous sound wave of the frequency $f^j$ are generated simultaneously in the AOE (and no sound waves of other frequencies are generated) when the *i*-th and *j*-th trapped ion are the addressed ions of an ion-pair operation. For instance, the 2-simultaneous sound wave of the first frequency $f^1$ is to be generated, in the AOE simultaneously with the 1-simultaneous sound wave of the second frequency $f^2$ in order to address the first and the second ion simultaneously. It is further noted that for each ion (except the *i*-th ion), there is an *i*-simultaneous sound wave of the frequency corresponding to said ion that is to be generated in the AOE simultaneously with another sound wave of frequency $f^i$ for performing an operation on the respective ion simultaneously with an operation on the *i*-th ion.

The *j*-simultaneous Rabi-oscillation of the *i*-th trapped atom and the *i*-simultaneous Rabi-oscillation of the *j*-th trapped atom are thus performed simultaneously. For instance, the 2-simultaneous Rabi-oscillation of the first trapped atom and the 1-simultaneous Rabi-oscillation of the second trapped atom are performed simultaneously. Simultaneous Rabi-oscillation are thus induced by the same input light deflected in the AOE by different sound waves in directed to the respective atoms. For instance, the 2-simultaneous Rabi-oscillation of the first trapped atom is induced by input light deflected in the AOE by a 2-simultaneous sound wave of frequency $f^1$ and to the first atom, and the 1-simultaneous Rabi-oscillation of the second trapped atom is induced by the same input light deflected in the AOE by a 2-simultaneous sound wave of frequency $f^1$ and directed to the second atom.

In general, the simultaneous Rabi-oscillations of the *i*-th trapped atom are oscillations between two predetermined (internal) states of the *i*-th trapped atom. In particular, the simultaneous and the non-simultaneous Rabi-oscillation of a trapped atom may be between the same states of the said trapped atom. As for the non-simultaneous Rabi-oscillations, the determination/selection of the states for the simultaneous Rabi-oscillations in general depends on the technical application, and the present invention does not depend on a particular method to select these states. Typically (but not necessarily), the same transition is used for both addressed ions (assuming the addressed atoms/ions are of the same type). The frequency of the input light used for ion-pair operations may then corresponds to the energy differences of both oscillations. For instance, the input light may be resonant with both simultaneous Rabi-oscillations of the respective ion-pair operation (and/or the input light may have a frequency such that the light directed to the ions is resonant in particular if the frequency shift in the first AOE is not compensated by a second AOE as discussed with respect to Fig.4 and 5).

In the case that a simultaneous sound waves are generated in the AOE, since the AOE is typically operated in the non-linear regime, the intensities of the two deflected beam is in general more complicated than in the non-simultaneous addressing. That is, in general each of the amplitudes of the two deflected beams depends usually on (depending on saturation):

- the amplitude of the input light,

- the ion-pair amplitude $a_2^{i,j}$ and the frequency $f^i$ of the *j*-simultaneous sound wave of frequency $f^i$, and

- the ion-pair amplitude $a_2^{j,i}$ and the frequency $f^j$ of the i-simultaneous sound wave of frequency $f^j$.

To be specific, when input light with a particular amplitude/intensity is input to the addressing unit, the intensity $I^i\left(a_2^{i,j}, f^i, a_2^{j,i}, f^j\right)$ of the j-th deflected beam depends on the ion-pair amplitudes $a^{i,j}$ and $a^{j,i}$ and the frequencies $f^i$

and $f^j$. This makes the determination of the intensities $I^i\left(a_2^{i,j}, f^i, a_2^{j,i}, f^j\right)$ and $I^j\left(a_2^{j,i}, f^j, a_2^{i,j}, f^i,\right)$ of the two deflected beam in general a non-trivial task. Furthermore, the relation between the amplitude of the light entering the optical system and individual Rabi-frequencies changes with respect to the single-addressing case. Thus (in particular due to the dependency on the frequencies of the other sound wave), the amplitudes of the individual N-1 simultaneous sound waves of each ion have to be adjusted/calibrated individually for the simultaneous addressing. Thus, in total there may be N(N-1) different simultaneous sound wave amplitudes to be calibrated.

The simultaneous addressing of two ions is illustrated in **Fig. 7**. More specifically, for the operation on the first and the second ion, two sound waves are generated in the addressing unit 340: a sound wave with ion-pair amplitude $a_2^{1,2}$ and frequency $f^1$ and a sound wave with ion-pair amplitude $a_2^{2,1}$ and frequency $f^2$. The input beam 300 is diffracted be these two sound wave in the AOE of the addressing unit, whereby the two deflected beams 781 and 782 are generated. As illustrated the intensities of both deflected beams 781, 782 depend on the amplitudes and frequencies of both sound waves. Furthermore, as in Fig. 6, it is assumed that the addressing unit 340 does not change the frequency $\omega_L = \omega_0$ of the input light 300 (e.g. by using an addressing unit as discussed with respect to Fig. 4). Thus, the frequency $\omega_L^1$ of the diffracted beam 781 is the same as the frequency $\omega_L = \omega_0$ of the input light 300, and the frequency $\omega_L^2$ of the diffracted beam 782 is the same as the frequency $\omega_L = \omega_0$ of the input light 300.

It is noted that the single-ion amplitudes $a_1^i$ and the ion-pair amplitude $a_2^{i,j}$ may be the amplitudes with which the controller (e.g. circuitry 215) controls the AOE to generate the respective sound-wave(s). Since e.g. the AOE may not work with absolute precision, the sound-wave(s) actually generated in the AOE usually have (slightly) different amplitudes than the values instructed by the controller. To take this difference between instructed and actual amplitudes into account may thus be part of the calibration of the optical system when determining the values for the amplitudes.

It is further noted that the present invention may also be used to calibrate sound wave amplitudes for the simultaneous addressing/manipulation of more than two ions. For instance, the present invention may be used to address/illuminate three or more respective ions (at the same time), e.g. in order to implement e.g. a 3-qubit gate in a quantum computer. Merely for the sake of simplicity and ease of understanding, usually only case of ion-pair operations is explicitly described.

Furthermore, it is noted that an ion-pair operation may be used for implementing an (entangling) two-qubit gate, but also to perform two (non-entangling) single-qubit operations/gates in parallel/at the same time, as in both cases two simultaneous sound waves would be generated in the AOE to direct light to two ions at the same time.

In particular, one may calibrate) the sound wave amplitudes $a_2^{i,j}$ and $a_2^{j,i}$ for a simultaneous two(multi)-qubit control operation, in which light is directed to two(multiple) ions simultaneously. One may then use these calibrated sound wave amplitudes $a_2^{i,j}$ and $a_2^{j,i}$ for performing non-entangling single-ion operations in parallel on these ions and/or for performing entangling two-ion operations. It is noted that there may in general be a dynamic calibration of other parameters of simultaneous operations. For instance, in case of entangling two-ion operations, the frequencies of the motional modes of the ions typically change over time typically require a dynamic calibration of the parameters related to the coupling to the motional modes (e.g. frequency of the light). For this, one may calibrate these other parameters of one or just a few simultaneous two(multi)-qubit control operation(s) and calculate the parameters for all the other pairs based on the calibrated parameters of said one/few pairs).

Considering that neither single-qubit calibrations nor the static machine-specific calibrations are perfect, it may further be useful to use either multiple pairs of two-qubit operations in parallel to average, or a connected sequence of multiple two-qubit operations, e.g. a GHZ sequence. This may allow to use a constant number of scans in the calibrations and that the number of qubit-laser interactions grows only linearly with register size at most.

### Calibration Process

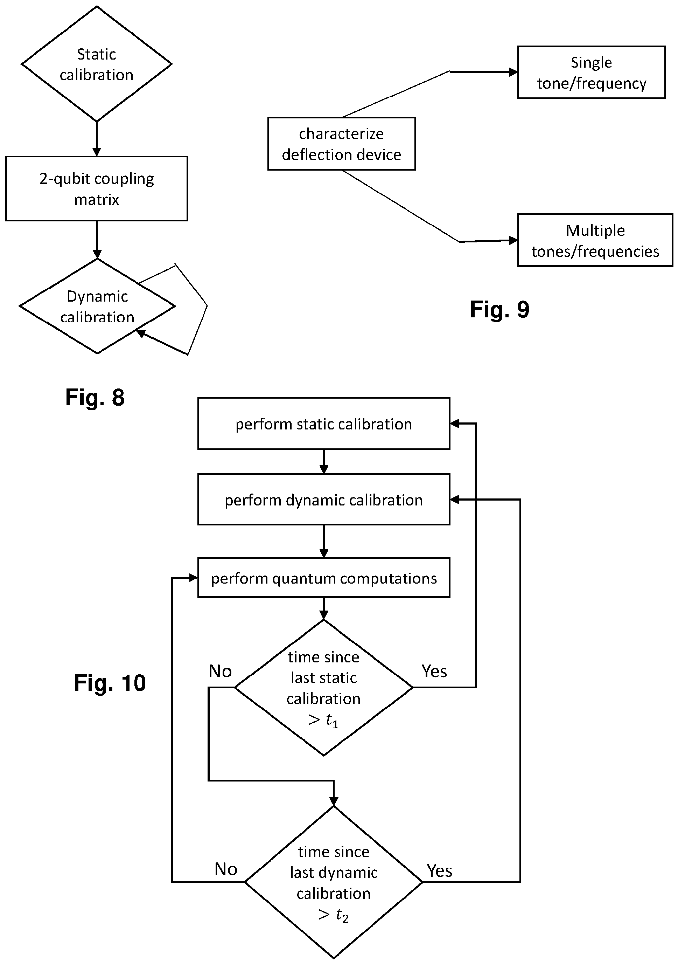

As illustrated in **Fig. 8**, the general scheme of the calibration process of the AOE may be divided into two parts, a static part and a dynamic part here also referred to as static and dynamic calibration. In other words, the calibration methods of the present disclosure allow to split the calibration in a static part and a dynamic part.

More specifically, an important idea of the present disclosure is to determine cross-dependencies between the single-ion and the ion-pair amplitudes to reduce the number of measurements in the dynamic part, which have to be performed more frequently. More specifically, there are usually cross-dependencies that only slowly change with time and which may thus be determined in the static calibration part. This allows to calculate the new/calibrated values ion-pair amplitudes $a_2^{i,j}$ based on calibrated single-ion amplitudes, i.e. without performing measurements of ion-pair oscillations.

Based on these static calibrations, a **coupling matrix** can be calculated and/or generated. The coupling matrix tells us, how the parameters of individual ion-pairs, such as the ion-pair amplitudes $a_2^{i,j}$ need to be adjusted based on the calibrated single-ion parameters. The coupling matrix thus allows to calculate the calibrated values of the ion-pair amplitudes $a_2^{i,j}$ based on the calibrated single-ion amplitudes $a_1^i$. In general, the coupling matrix corresponds to one or more relation(s) between the calibrated single-ion amplitudes $a_1^1, a_1^2, ...., a_1^N$ and the calibrated ion-pair amplitudes $a_2^{i,j}$ that allows to calculate the new/calibrated $a_2^{i,j}$ based on the calibrated single-ion amplitudes. It is noted that the single-ion amplitudes $a_1^i$ of different qubits/ions may in general be different. For instance, assuming that the amplitudes $a_2^{i,j}$ and $a_2^{j,i}$ may be different, the coupling matrix may correspond to a set of ($N^2$ - N) functions $a_2^{i,j} (a_1^1, a_1^2, ...., a_1^N)$, which yield the calibrated values of the ion-pair amplitudes when the calibrated values of the single-ion amplitudes are inserted.

The *static* part can in principle be very time consuming as the number of measurements to be performed in the static calibration may e.g. scale quadratically with the number of ions/qubits when determining parameters for the dynamic calibration of ion-pair operations. On the other hand, the static part may have to be done only once for a specific hardware setup and qubit register or at least may have to be done much less frequently than the dynamic part. In particular, the parameters determined by measurements in the static calibration usually change much slower than the parameters measured in the dynamic part. From the static calibrations a coupling matrix is generated that is the basis for some calibrations in the dynamic part.

The *dynamic* part may (have to) be implemented/performed more regularly than the static part. For instance, the parameters determined by measurements in the dynamic calibration may typically drift faster than the parameters measured in the static calibration and/or may have a larger impact on the operations performed on the ions. On the other hand, the dynamic part can in general be performed much faster than the static part. In particular, even when calibrating the acousto-optical element for ion-pair operations, the number of measurements to be performed in a dynamic calibration may only scale linearly with the number of ions (as e.g. only single-ion Rabi-oscillations are measured). Accordingly, the proposed separation into static and dynamic calibration may save a substantial amount of time, which may be important in particular when calibrating regularly between quantum computations.

*Target Rabi-Frequencies*

In general, for each of the trapped ions, there is a predetermined frequency $\Omega_1^i$ value for the non-simultaneous Rabi-oscillation. This predetermined frequency for the non-simultaneous Rabi-oscillation of the j-th atom is referred to as single-ion target frequency $\Omega_1^i$. Furthermore, for each simultaneous Rabi-oscillation, there are two predetermined frequency values respectively for the two addressed atoms. For simultaneous operation on the *i*-th and the *j*-th atom, the target Rabi-frequency of the *i*-th atom is denoted as $\Omega_2^{i,j}$, and the target Rabi-frequency of the *j*-th atom is denoted as $\Omega_2^{j,i}$.

The predetermined frequency values for the simultaneous and the non-simultaneous Rabi-oscillations are target values (i.e. desired values) for the respective Rabi-oscillations. Thus, the predetermined frequency values may be determined depending on and/or given by the particular technical application for which the manipulation of the trapped ions is to be performed. How the target values $\Omega_1^i$ are determined or obtained is thus in general not important for the present invention. It is however noted that, for typical application, the two ion-pair target frequencies $\Omega_2^{i,j}$ and $\Omega_2^{j,i}$ of the two addressed atoms of an ion-pair manipulation are equal.

In particular when using the trapped ions to implement a quantum computer, typical constraints are:

1. $\Omega_1^i = \Omega_1^j$ for all $i,j \in \{1, 2, 3, ...,N\}$, i.e. all single-ion target Rabi frequencies are to be equal;

2. $\Omega_2^{i,j} = \Omega_2^{j,i}$ for all $i,j \in \{1, 2, 3, ..., N\}$ with $i \neq j$, i.e. the two ions of each simultaneously addressed ion pair are to oscillate with the same target Rabi frequency;

3. $(\Omega_2^{i,j}, \Omega_2^{j,i}) = (\Omega_2^{k,l}, \Omega_2^{l,k})$ for each ion pair, i.e. for all $i,j,k,l \in \{1, 2, 3, ...,N\}$ with $i \neq j$ and $k \neq l$;

4. $\Omega_2^{i,j} = \Omega_2^{k,l}$ for all $i, j, k, l \in \{1, 2, 3, ..., N\}$ with $i \neq j$ and $k \neq l$; and/or

5. $a_2^{i,j} \approx a_2^{j,i} \approx a_1^i / \sqrt{2}$, i.e. the total RF power on the deflector (i.e. the AOE) is to be roughly constant.

Since the intensities of the deflected beams depend on the amplitudes of the sound waves in the addressing unit, the amplitudes of the sound waves generated in the addressing unit have thus to be calibrated to obtain Rabi-oscillations with the respective target frequencies. The present disclosure is particularly concerned with an efficient calibration of the ion-pair amplitude $a_2^{i,j}$ to obtain simultaneous Rabi-oscillations with target frequencies $\Omega_2^{i,j}$. More specifically, aim of the dynamic calibration is to obtain/calibrate the ion-pair amplitudes $a_2^{i,j}$ at which an $j$-simultaneous Rabi-oscillation of the $i$-th trapped atom has a predetermined frequency value $\Omega_2^{i,j}$. That is, ion-pair amplitudes $a_2^{i,j}$ are to be determined such that, when the $j$-simultaneous sound wave of frequency $f^j$ and the i-simultaneous sound wave of frequency $f^i$ are generated in the AOE and input light with a particular predetermined/given intensity is input to the optical system: the light directed to the j-th and j-th trapped atom induces Rabi-oscillations with the target frequencies $\Omega_2^{i,j}$ and $\Omega_2^{j,i}$, respectively.

The particular method used for calibrating the single-ion amplitudes $a^i$ is thus in general not important for the present invention.

### *Static Calibration*

In general, in order to calculate correct parameters for ion-pair operations, e.g. multi-qubit control, from calibrated single-ion/single-qubit control parameters, some *"static"* machine-specific calibrations are performed first. In the *static part,* cross dependencies between the Rabi-frequencies of the simultaneous and the non-simultaneous Rabi-oscillations are determined. For instance, when the amplitudes for quantum computation, cross dependencies between the ion/qubits are determined. The static part of the calibration may also include other calibrations for technical cross dependencies, such as:

- Characterization of the addressing AOM/AOD efficiency as a function of frequency and power;
- Characterization (e.g. determination) of the switching/frequency shifting AOEs efficiencies as a function of frequency and power (this might e.g. be beneficial if different carriers are utilized or to take long term reference cavity drifts into account);
- Characterization (e.g. determination) of the anharmonicity of the trap that changes the coupling of individual ions to various motional modes (improves the predicted coupling strength to motional modes);
- Characterization (e.g. determination) the optical crosstalk between control channels and other ions; and/or
- Characterization (e.g. determination) of the rf crosstalk between control channels and other ions.

Furthermore, e.g. when implementing MS gates with the ion-pair operations, the coupling strengths of individual ions to different modes may be determined. Moreover, the determination of the frequencies $f^i$ may also be part of static calibration and/or the optical system may also be configured to direct light deflected by the angle $\theta$ to the $i$-th ion.

***Determination of Exponent k for dynamic Calibration of Single-Ion Amplitudes***

In general, the present invention is not limited to a particular method for calibrating the single-ion amplitudes $a_1^i$. As an example, a method based on a predetermined exponent of a power law is presented herein. That is, as illustrated in **Fig. 9,** the static part may, next to the characterization of the deflection device's efficiency in ion-pair/multi-tone operations described below, the characterization of the deflection device (AOE) may also include characterization of the deflection device's efficiency in single-ion operations.

Usually, for a given/fixed amplitude of the input light, the dependency of the frequency $\omega_1^i$ of the $i$-th single-ion Rabi-oscillation on the amplitude $a_1^i$ of $i$-th non-simultaneous sound wave may be expressed in form of a power law as

$$\omega_1^i\big(a_1^i, t\big) = C^i(t) \cdot \big(a_1^i\big)^k.$$

Here, the exponent $k$ of the power such a power law usually changes slowly with time $t$. The value of $k$ may thus be determined as part of the static calibration (in particular may be treated as a fit parameter). Furthermore, it is noted that $k$ is usually (substantially) identical for all ions. In other words, the same value for $k$ can be used for all ions (thus no individual "$k^i$" are introduced here). In general, the value of the exponent $k$ depends on whether resonant or non-resonant light is used to induce the Rabi-oscillation. The value of $k$ may thus in particular depend on the type of quantum gates and how the quantum gates are implemented. The prefactor $C^i(t)$, on the other hand, usually changes substantially faster with the time $t$ than the exponent $k$. Furthermore, the prefactor $C^i(t)$ usually depends on the addressed ion, i.e. different ions have usually different values for the prefactor $C^i(t)$.

The above power laws (i.e. there is one law for each of the N ions) thus relate the values of the amplitudes $a_1^i$ with respectively corresponding frequency values $\omega_1^i\big(a_1^i, t\big)$ of the non-simultaneous Rabi-oscillation of the respective trapped atom.

The power laws thus characterize the addressing AOM/AOD efficiency as a function of frequency and power. As further explained below, they can thus be used to calculate the amplitude change needed to come e.g. from a measured Rabi/Pi time (gate time to implement e.g. rotation by an angle of Pi) to a desired Rabi/Pi time.

***Determination of Relation between Simultaneous and Non-Simultaneous Sound Wave Amplitudes***

As part of the static calibration, the AOE efficiency in multi-tone operation may be characterized. For instance, for each tone (i.e. for each sound wave frequency $f$), the ion-pair amplitudes $a_2^{i,j}$ are determined as functions of the calibrated single-ion amplitudes $a_1^i$. This allows to calculate, based on the single-ion Rabi frequency calibrations, the correct ion-pair amplitudes $a_2^{i,j}$ such that two simultaneously addressed ions/qubits have the respective target Rabi frequencies.

More specifically, for each ion pair $(i,j)$, the corresponding ion-pair amplitudes $a_2^{i,j}$ may be determined as functions $a_2^{i,j}\big(a_1^1, a_1^2, \ldots, a_1^N\big)$ of the calibrated single-ion amplitudes, where the function for a specific ion-pair $(i,j)$ may in general depend on all calibrated single-ion amplitudes or just on some subset of the calibrated single-ion amplitude (usually including at least the single-ion amplitudes $a_1^i$ and $a_1^j$ of the respective ion-pair).

The functions $a_2^{i,j}\big(a_1^1, a_1^2, \ldots, a_1^N\big)$ are determined such that, when the calibrated non-simultaneous sound wave amplitudes $a_1^i$ (at which the ions oscillate respectively with the target frequencies $\Omega_1^i$) are inserted into the functions $a_2^{i,j}\left(a_1^1, a_1^2, \ldots, a_1^N\right)$, the calculated amplitudes $a_2^{i,j}$ of the simultaneous sound waves are such that the j-th and j-th ion oscillate (in a good approximation) with the target frequencies $\Omega_2^{i,j}$ and $\Omega_2^{j,i}$, respectively.

Furthermore, since the intensity of the light leaving the AOE depends also (in addition to dependence on the amplitude of the sound wave(s)) on the amplitude of the input light entering the AOE, the functions $a_2^{i,j}\left(a_1^1, a_1^2, \ldots, a_1^N\right)$ are determined for given/fixed/predetermined intensities of the input light (e.g. when entering the AOE and/or before deflection in the AOE). The values $a_2^{i,j}$, calculated in Step S160 of the dynamic calibration, thus correspond to the predetermined amplitudes/intensities of the input light. These predetermined intensities are:

(i) predetermined intensities $I_{1,light}^i$ of the input light to be used for the respective calibration measurements of the single-ion amplitudes $a_1^i$ in step S140 (i.e. one predetermined light intensity for each ion), and

(ii) predetermined intensities $I_{2,light}^{(i,j)} = I_{2,light}^{(j,i)}$ of the input light for the ion-pair amplitudes (i.e. one predetermined light intensity for each ion pair).

That is, if the calibration measurements are performed using input light with intensities $I_{1,light}^i$, the ion-pair amplitudes $a_2^{i,j}$ calculated based on these functions (or the coupling matrix) are such that the ions oscillate (in a good approximation) with the target frequencies if the input light has intensity $I_{2,light}^{(i,j)}$,

In general, one/the same light intensity may be used for all dynamic single-ion calibration measurements, i.e. $I_{1,light}^i \equiv I_{1,light}$. Furthermore, in general all predetermined light intensities for which the functions/coupling matrix is determined may be identical. However, the present invention is not limited thereto as in general, for each single-ion and each ion-pair operations, a different predetermined intensity of the input light may be given. For instance, an AOM in front of the optical system may be used to adjust the intensity of the input light.

It is noted that, e.g. when implementing a MS gate, the excitation is performed (virtually) via the motional modes of the trapped ions. Therefore, a larger light intensity is usually required (e.g. to obtain a certain gate time/duration the two-qubit operation requires) for the ion-pair operations than for the single-ion operations. Accordingly, the intensity of the input light is typically increased for the qubit-pair operations. Thus, the predetermined intensities $I_{2,light}^{(i,j)}$ are typically larger than the predetermined intensities $I_{1,light}^i$.

Thus, the functions $a_2^{i,j}\left(a_1^k\right)$ are determined with respect to the single-ion target frequencies $\Omega_1^i$ and the ion-pair target frequencies $\Omega_2^{i,j}$. In other words, the functions $a_2^{i,j}\left(a_1^k\right)$ are determined/depend on the target frequencies $\Omega_1^i$ and the target frequencies $\Omega_2^{i,j}$. The functions $a_2^{i,j}\left(a_1^1, a_1^2, \ldots, a_1^N\right)$ thus allow to calculate the ion-pair amplitude values $a_2^{i,j}$ based on the calibrated single-ion amplitude values $a_1^i$.

For instance, in particular for small differences between the single-ion amplitudes $a_1^i$ and their average value $\tilde{a}_1$ (e.g. for $\left|a_1^i - \tilde{a}_1\right| \ll \tilde{a}_1$), a good approximation for the ion-pair amplitudes $a_2^{i,j}$ is often given by the function

$$a_2^{i,j}\left(a_1^i, a_1^j, \tilde{a}_1\right) = \frac{2\cdot\left(\tilde{a}_1 + (a_1^i - \tilde{a}_1)S\right)}{2\tilde{a}_1 + (a_1^i - \tilde{a}_1)S + (a_1^j - \tilde{a}_1)S}\sqrt{a_1^i \cdot a_1^j / 2}\,.$$

Here, $\tilde{a}_1 = \sum_{k=1}^{N} a_1^k / N$ is the average amplitude value of all single-ion amplitudes. Furthermore, $S$ is a fit parameter. It is noted that the same value for the fit parameter $S$ may be used in the functions $a_2^{i,j}\left(a_1^i, a_1^j, \tilde{a}_1\right)$ of different ion pairs. In particular, the same value for $S$ may be used for all ion pairs. But the present invention is not limited thereto.

The function $a_2^{i,j}\left(a_1^i, a_1^j\right)$ has been derived empirically and works rather well for small differences $\left|a_1^i - \tilde{a}_1\right| \ll \tilde{a}_1$. It is noted that the present disclosure is not limited to the above formula, which is merely an example. In general, the formula/coupling matrix may look different and may e.g. be determined using machine learning.

In general, the coupling matrix comprises parameters that are determined as part of the static calibration, such as the fit parameter $S$ in the above example. Such values of these parameters are determined as part of the static calibration when determining the coupling matrix. More specifically, they may be determined by fitting the coupling matrix, e.g. the above formula for $a_2^{i,j}\left(a_1^i, a_1^j, \tilde{a}_1\right)$, on one or more sets ($a_1^i, a_2^{i,j}$) of calibrated single-ion amplitudes and ion pair amplitudes. As the static calibration is less time-sensitive, these sets ($a_1^i, a_2^{i,j}$) of calibrated amplitudes may be obtained by an (or even more than one) explicit measurement of the frequencies for each simultaneous and each non-simultaneous Rabi-oscillation.

### *Dynamic Calibration*

The *dynamic part* may include measurements of 1-qubit/single-ion operations (e.g. only measurements of single-atom Rabi-oscillations). Furthermore, global parameters may be measured, where the term *"global parameter"* refers to a parameter related to all 2-qubit/ion-pair operations and/or a parameter that is the same for all 2-qubit operations in a specific register. However, the determination of such global parameters are not of particular importance for the calibration of the simultaneous sound wave amplitudes.

The dynamic part has to be done (more) regularly than the static part due to drifts in experimental parameters. However, using the dynamic calibration presented above, the number of required laser ion interactions grows only linearly with register size N (i.e. grows only linearly with the number *N* of trapped atoms). Since most 1-qubit/single-ion measurements can be done as part of a fixed number of scans (as mentioned above, usually not more than 3), the number of required preparation and detection operations grow only sub-linearly with the register size *N*. Detection and preparation usually costs more than 80% of the time for these simple calibration sequences. This results in a calibration overhead that is almost independent from register size.

### *Dynamic Calibration of Single-Ion Amplitudes (S140)*

As part of the dynamic calibration, the calibrated single-ion amplitudes $a_1^i$ are obtained in step S140. To be specific, for each ion (i.e. for each $i \in \{1, 2, 3, ..., N\}$), the calibrated value $a_1^i$ is the value of the j-th single ion amplitude at which the non-simultaneous Rabi-oscillation of the *i*-th trapped atom has the target value $\Omega_1^i$. In particular, the calibrated single-ion amplitudes $a_1^i$ may be updated/new values for the single-ion amplitudes $a_1^i$, i.e. amplitude values that are to replace currently used single-ion amplitude values in order to take into account recent drifts in the experimental conditions.

The calibrated value $a_1^i$ corresponds to a predetermined amplitude/intensity of the light before the deflection in the AOE. More specifically, since the intensity of the light leaving the AOE depends also (next to the amplitude of the sound wave) on the intensity of the input light entering the AOE, the calibrated single-ion amplitudes $a_1^i$ correspond to a respective intensity value $I_{L,1}^i$ of the input light (e.g. when entering the AOE.). In general, as mentioned above, the intensity values of the input light for which the values of the single-ion amplitudes $a_1^i$ are obtained may be different for different ions. However, in general, the calibrated values $a_1^i$ of all ions may correspond to the same predetermined amplitude/intensity of the input light.

Summarizing the above, when a sound wave having the calibrated amplitude value $a_1^i$ and frequency $f^i$ is generated in the AOE and the input light has the intensity $I_{L,1}^i$, the light directed to the $i$-th ion causes a Rabi-oscillation with the target frequency $\Omega_1^i$.

In general, the calibrated amplitude values $a_1^i$ of the non-simultaneous sound waves may be input via an interface. However, the calibrated amplitude values $a_1^i$ may also be determined as part of the calibration method. For this, as further explained below, measurements of single-ion Rabi-oscillations and the value of the exponent $k$, determined as part of the static calibration may be used.

### Measurement

In general, the calibrated value for a/each single-ion amplitude $a_1^i$ may be obtained in accordance with/based on a measurement of the frequency of the non-simultaneous Rabi-oscillation of the $i$-th trapped atom. This may include, (i) inputting light into the optical system, (ii) generating a non-simultaneous sound wave of the frequency $f^i$ and with sample amplitude $a_{1,s}^i$ in the AOE, and (iii) measuring the frequency $\Omega_{1,s}^i$ of the (resulting) non-simultaneous Rabi-oscillation of the $i$-th ion. For these measurements, the intensities (or absolute value of the amplitude) of the input light have respective predetermined sample values $\tilde{I}_{L,1}^i$, and the amplitudes of the non-simultaneous sound waves have respective predetermined sample values $a_{1,s}^i$.

It is to be noted that, although for the sake of simplicity assumed in the following, the sample amplitude $\tilde{I}_{L,1}^i$ of the input light used for the measurement may in general be different than the intensity $I_{L,1}^i$ for which the calibrated amplitude values $a_1^i$ is to be obtained. In general, one may try to minimize the difference between the value $a_{1,s}^i$ and the calibrated value $a_1^i$ in order to improve the accuracy of the calibrated value $a_1^i$. For this, the value $a_{1,s}^i$ may e.g. be chosen to be currently used value for the single-ion operation on the $i$-th ion, i.e. to be the calibrated value obtained in the last dynamic calibration. Furthermore, the value $a_{1,s}^i$ may be determined e.g. assuming a linear drift based on previous changes/updates of the calibrated value $a_1^i$ (e.g. the difference between the current and the new single-ion amplitude in the previous dynamic calibration steps may be used to estimate the new calibrated amplitude value). However, the particular choice of values for $\tilde{I}_{L,1}^i$ and $a_{1,s}^i$ is in general not important for the present invention.

### Power Law

In general, in order to obtain/determine the calibrated value for a single-ion amplitude $a_1^i$, the measured

frequency $\Omega^i_{1,s}$ of the non-simultaneous Rabi-oscillation of the $i$-th ion may be used. For instance, the calibrated single-ion amplitude $a^i_1$ may be obtained in accordance with a power law of the form $\Omega^i_1(a^i_1,t) = C^i(t) * (a^i_1)^k$ according to

$$a^i_1 = a^i_1(\Omega^i_1, t_m) = \sqrt[k]{\Omega^i_1/C^i(t_m)} = \sqrt[k]{\Omega^i_1/\Omega^i_{1,s}} = a^i_{1,s} * (\Omega^i_1/\Omega^i_{1,s})^{1/k},$$

where

- the exponent k may have been determined as part of the static calibration, as described above;
- $\Omega^i_1$ is the target single-ion Rabi-frequency of the $i$-th ion;
- $a^i_{1,s}$ is the sample value of the non-simultaneous sound wave used for the measurement;
- $t_m$ is the time at which the measurement is performed; and
- $\Omega^i_{1,s}$ is the single-ion Rabi frequency measured in said measurement.

If for instance, the calibration measurement at time $t_2$ is performed with sample amplitude $a^i_{1,s} = a^i_1(\Omega^i_1, t_1)$ (i.e. with the calibrated amplitude $a^i_1(\Omega^i_1, t_1)$ obtained at the last dynamic calibration time $t_1$) the calibrated value at the dynamic calibration at time $t_m$ may be obtained according to

$$a^i_1 = a^i_1(\Omega^i_1, t_m) = a^i_1(\Omega^i_1, t_1) * (\Omega^i_1/\Omega^i_{1,s})^{1/k},$$

***Dynamic Calibration of Ion-Pair Amplitudes (S160)***

In the present section, further details of the step S160 of calculating the ion-pair amplitudes $a^{i,j}_2$ are explained.

The values $a^{i,j}_2$ calculated in this step of the dynamic part may be used for calibrating the ion-pair amplitude(s). More specifically, the simultaneous Rabi-amplitudes are not calibrated using explicit measurements in which both ions of the respective ion-pair are illuminated with laser light at the same time. Rather, the calibrated values of the ion-pair amplitudes $a^{i,j}_2$ are calculated based on the relations/coupling matrix, determined in the static calibration, and the calibrated amplitudes of the single-ion amplitudes obtained in step S140.

In general (the following applies to each ion-pair ($i,j$) of an $i$-th and an $j$-th trapped atom, e.g. with $1 \le i < j \le N$, $i \ne j$), the calibrated values of the ion-pair amplitudes $a^{i,j}_2$ are calculated in accordance with a predetermined relation between the calibrated single-ion amplitudes $a^1_1, a^2_1, \dots, a^N_1$ and the calibrated ion-pair amplitudes $a^{i,j}_2$. Said predetermined relation or *"coupling matrix"* may have been determined, in the static calibration, as described above. For instance, the above formula

$$a^{i,j}_2(a^i_1, a^j_1, \tilde{a}_1) = \frac{2 \cdot (\tilde{a}_1 + (a^i_1 - \tilde{a}_1)S)}{2\tilde{a}_1 + (a^i_1 - \tilde{a}_1)S + (a^j_1 - \tilde{a}_1)S} \sqrt{a^i_1 \cdot a^j_1 / 2}$$

may be used to calculate the values of the calibrated ion-pair amplitudes $a_2^{i,j}$. Form this, the calibrated ion-pair amplitudes $a_2^{i,j}$ may thus be calculated by inserting the calibrated single-ion amplitudes $a_1^1, a_1^2, \ldots, a_1^N$, obtained in step S140. Here it is noted that $\tilde{a}_1 = \sum_{k=1}^{N} a_1^k / N$ is the average of the calibrated ingle-ion amplitudes, i.e. the value of average $\tilde{a}_1$ is also updated in the dynamic calibration.

### *Quantum Computation*

As already mentioned above, the calibration method(s) of the present disclosure may be used in particular to speed up the computation in a quantum computer. In particular, the calibration time between quantum computations may be decreased, thereby increasing the (percentage of the) time the computer is actually performing computations.

Accordingly, the present disclosure provides a (quantum computation) method for performing quantum computations on the trapped atoms. The method comprises (i) performing quantum operations and (ii) performing between the quantum operations, any of the calibration methods of the optical system described above.

Furthermore, apparatuses corresponding to such quantum computations methods are provided. More specifically, such apparatuses are configured to (i) perform quantum operations, and (ii) between the quantum operations, any of the calibration method described above. For instance, such an apparatuses may be a controller configured to control the lasers and/or the optical system (i) to perform the quantum computations on the atoms and (ii) to induce the Rabi-oscillations for the calibration measurements. In particular, the controller may control the AOE to generate the sound waves with the appropriate amplitudes (e.g. for calibration measurements with the respective predetermined sample amplitude and for quantum computations with a value corresponding to the respective calibrated amplitude value).

Furthermore, computer programs comprising instructions that cause a computer to perform such controlling, and a computer-readable storage mediums comprising such computer programs are provided.

The quantum operations on the trapped atoms include single-qubit operations on the *N* trapped atoms, and two-qubit operations on the *N* trapped atoms. Here, *"single-qubit operations"* and *"two-qubit operations"* refer to operations performed on single ion and ion-pairs, respectively. The *"single-qubit operations"* and *"two-qubit operations"* implement quantum gates on the *N* qubits, represented by the *N* trapped atoms, respectively. More specifically, in general the two states of the Rabi oscillation of the *i*-th atom may be used to represent the *i*-th qubit.

### *Single-qubit Operations*

The single-qubit operation on the *i*-th atom (i.e. a single-qubit gate on the *i*-th qubit) may be performed by performing a single-ion operation, as described above, i.e. by generating an *i*-th non-simultaneous sound wave with the calibrated single-ion amplitude value $a_1^i$. That is, the sound wave is generated with an amplitude value that is in accordance with the sing-ion amplitude obtained in a previous (e.g. the most recent) calibration of this amplitude value.

As already explained above, the optical system then directs (part of the) input light to the *i*-th atom which induces a Rabi-oscillation, which may be used to implement a single-qubit operation/gate on the *i*-th qubit. At this, the frequency of the input light may be the same as the frequency used for calibrating the single-ion amplitude *i*-th. For instance, the frequency of the input light may be resonant the *i*-th Rabi-oscillation (i.e. the energy of a photon of the input light may be identical to the energy difference of the two states of the *i*-th Rabi-oscillation).

In general, as already mentioned above, the intensity of the input light used for a single-qubit operation may be time-dependent and/or different than the intensity (e.g. different than the respective above-mentioned predetermined intensity $I_{1,light}^i$) of the input light used in the calibration measurements, as the impact of a different input light intensity on the frequency of a Rabi oscillation can usually be easily calculated (usually, light intensity and frequency are proportional). In other words, if a Rabi frequency for a particular input light intensity is known, the Rabi frequency for a different input light intensity can usually be calculated (otherwise same experimental setting, in particular sound wave amplitude(s)).

Furthermore, it is noted that the amplitudes of a non-simultaneous sound wave may be time-dependent and/or may be different than the respective calibrated ion-pair amplitude value $a_1^i$. To be specific, a single-ion operation on the j-th atom may in general be performed by generating an *i*-th non-simultaneous sound wave (i.e. a sound wave with frequency $f^i$). At this, the amplitude of the non-simultaneous sound wave may be time-dependent and/or different than the respective calibrated ion-pair amplitude value $a_1^i$ . For instance, the non-simultaneous sound wave be generated with an (e.g. time-dependent) amplitude that is in accordance with the calibrated ion-pair amplitude value $a_1^i$ . In particular, the calibrated value $a_1^i$ .may be used to calibrated the maximum intensity or the average intensity of a time-dependent sound wave of a particular (given/predetermined) shape. Thus, in general, the intensity of the non-simultaneous sound wave for performing a single-qubit operation may be determined based on/in accordance with the calibrated value $a_1^i$ .

***Two-qubit Operations***

The two-qubit operation on the ion pair (*i,j*) (i.e. a two-qubit gate on the *i*-th and *j*-th qubit) may be performed by performing a ion-pair operation, as described above. More specifically, a two-qubit operation on the ion pair (*i,j*) may be performed by generating, simultaneously:

- the *j*-simultaneous sound wave of the frequency *f$^i$* with the calibrated ion-pair amplitude value $a_2^{i,j}$ , and

- the i-simultaneous sound wave of the frequency *f$^j$* with the calibrated ion-pair amplitude value $a_2^{j,i}$ .

That is, the sound wave is generated with an amplitude value that is in accordance with the ion-pair amplitudes obtained in a previous (e.g. the most recent) calibration of these ion-pair amplitude value. As already explained above, the optical system then directs (part of the) input light to the *i*-th and *j*-th atom.

In general, two-qubit gates are implemented by exciting transitions off-resonantly. That is, the frequency of the input light is usually detuned from (i.e. in some sense slightly different than) the energy difference between the two qubit states. In other words, light with a (slightly) different frequency or frequencies than for the single-ion operations is used. In particular, the light for the qubit-pair operations may include light having two or more frequencies detuned from the frequency of the single-ion operations. More specifically, the light typically includes (i) a light component with a frequency that is higher, by an amount $\Delta f > 0$, than the frequency of the light used for the single-ion operation, and (ii) a light component with a frequency that is lower, by the same amount $\Delta f > 0$, than the frequency of the light used for the single-ion operation.

It is further noted that the intensities of the input light used for a two-qubit operation may in general, as already mentioned above, be time-dependent and/or different than the intensities (e.g. different than the respective above-mentioned predetermined intensities $I_{2,light}^{(i,j)}$ and $I_{2,light}^{(j,i)}$ ) of the input light to which the values $a_2^{i,j}$ and $a_2^{j,i}$ , calculated in Step S160 of the dynamic calibration correspond. The impact of a different input light intensity on the frequency of a Rabi oscillation can usually be easily calculated (usually, light intensity and frequency are proportional). In other words, if a Rabi frequency for a particular input light intensity is known, the Rabi frequency for a different input light intensity can usually be calculated (otherwise same experimental setting, in particular sound wave amplitude(s)).

Furthermore, it is noted that the amplitudes of the simultaneous sound waves may be time-dependent and/or may be different than the respective calibrated ion-pair amplitude values $a_2^{i,j}$ and $a_2^{j,i}$ . To be specific, a two-qubit operation on the ion pair (*i,j*) may be performed by generating, simultaneously:

- an *j*-simultaneous sound wave of the frequency *f$^i$*, and
- an *i*-simultaneous sound wave of the frequency *f$^j$*.

At this, the amplitude of the *j*-simultaneous sound wave of the frequency *f$^i$* may be time-dependent and/or different than the calibrated ion-pair amplitude value $a_2^{j,i}$ , and/or the amplitude of the *i*-simultaneous sound wave of the frequency *f$^j$* may be time-dependent and/or different than the calibrated ion-pair amplitude value $a_2^{i,j}$ . For instance, said *j*-simultaneous may be generated with an (e.g. time-dependent) amplitude that is in accordance with the calibrated ion-pair amplitude value $a_2^{i,j}$ , and/or said i-simultaneous sound wave may be generated with an (e.g. time-dependent) amplitude in accordance with the calibrated ion-pair amplitude value $a_2^{j,i}$. In particular, the calibrated values $a_2^{i,j}$ may be used to calibrated the maximum intensity or the average intensity of a time-dependent sound wave of a particular (given/predetermined) shape. Thus, in general, the intensities of the simultaneous sound waves for performing a two-qubit operation may be determined based on/in accordance with the calibrated values $a_2^{i,j}$.

### *Updating of Coupling Matrix*

As mentioned above, the dynamic parts (e.g. steps S140 and S160) of the calibration methods of the present disclosure are typically performed more frequently than the static parts. However, the static calibration steps may also be performed more than once (in particular when the quantum computer is operating an extended duration).

In general, as illustrated in **Fig. 10,** a static calibration, as described above, may be performed between the quantum operations.

This static calibration may in particular include updating of the predetermined relation(s)/coupling matrix based on measurements performed on the trapped atoms (e.g. new determination/updating of the fit parameter *S*).

Furthermore, if in the dynamic calibration the single-ion amplitude of an ion is updated in accordance with a predetermined exponent of a power law, the quantum computations method may include, between the quantum operations, updating of the predetermined exponents *k* (or exponents $k^i$) based one or more measurements performed on the trapped ions.

As already mentioned, the static calibration may be performed less frequently than the (typically less time-consuming) dynamic calibration. In other words, the updating of the predetermined relation, the first predetermined exponent, and/or the second predetermined exponent may be performed less frequently than the calibration method. Thus, in Fig. 10, the time $t_1$ between static calibrations is smaller than the time $t_2$ between calibrations that perform only the dynamic part.

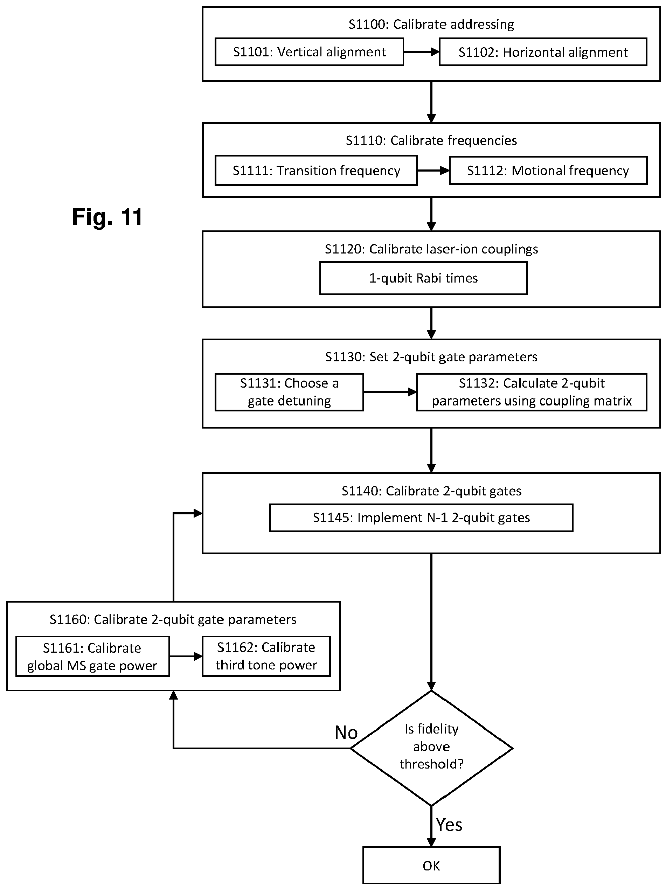

As a further example, an explicit efficient entangling gate tune-up for an ion trap quantum computer is presented with reference to **Fig. 11**. This method may in particular be used for a repeated 2-qubit MS gate calibration. It is however noted that this is merely an example and that not all of the below steps have to be implemented. In particular, as part of the dynamic calibration:

- the addressing alignment may be calibrated S1110. For instance, this may include a step of calibrating S1101 the vertical addressing alignment (1 scan with prop *N* laser qubit interactions) and a step of calibrating S1102 the horizontal addressing alignment (1 scan, prop *N* laser-qubit interactions);
- the qubit transition frequencies may be calibrated S1111 (1 scan with a constant number of laser-qubit interactions; here and below "*constant*" means not scaling with the register size N). In other words, the energy differences between the qubit states are calibrated;
- the motional frequencies may be calibrated S1112, i.e. the voltages applied to the electrodes of the ion trap are calibrated (either radial or axial) such that a COM mode has a fixed/predetermined frequency (1 scan with a constant number of laser-qubit interactions).
- the applied pulse amplitude may be calibrated S1120 such that every single qubit has a fixed Rabi time instead of calibrating the Rabi time and keeping the Pulse amplitude fixed. (2 scans with prop *N* laser-qubit interactions);
- the qubit parameters may be set S1130. In particular, a desired gate time and a corresponding detuning (e.g. to close a COM mode in 1 loop and a next mode in n loops) may be chosen/determined S1131. Furthermore, the 2-qubit parameter matrix may be used to determine S1132 the required MS gate parameters, i.e. in step S1132 the coupling matrix determined in the static part (static calibration part not shown in Fig. 11) may be used to calculate the calibrated amplitudes of the simultaneous sound waves used for the MS gates;
- the 2-qubit gate parameters may be calibrated S1140. In particular, calibration sequence is implemented S1145. For example, *N*-1 2-qubit gates may be implemented to generate a maximally entangled Greenberger-Horne-Zeilinger (GHZ) state and this state may be used to calibrate S1160 the following two global parameters iteratively.
- the global power of the two MS gate tones may be calibrated S1161 (1 scan with *N* laser-qubit interactions), and the global power of the third tone may be calibrated S1162 to compensate for the AC Stark shift induced by the MS gate (1 scan with prop *N* laser-qubit interactions).

### *Further Aspects*

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

According to a first aspect, a calibration method is provided. The calibration method is for calibrating an amplitude of a simultaneous sound wave of a first frequency $f^1$ to be generated, in an acousto-optical element included in an optical system, simultaneously with a simultaneous sound wave of a second frequency $f^2$. The optical system is configured to: (i) direct light, deflected in the acousto-optical element by a sound wave of the first frequency $f^1$, to a first trapped atom among $N \geq 2$ trapped atoms, and (ii) direct light, deflected in the acousto-optical element by a sound wave of the second frequency $f^2$, to a second trapped atom among the $N \geq 2$ trapped atoms. The calibration method comprises a step of obtaining a first calibrated value $a_1^1$ of an amplitude of a first non-simultaneous sound wave of the first frequency $f^1$ at which a non-simultaneous Rabi-oscillation of the first trapped atom has a first predetermined frequency value $\Omega_1^1$, wherein the non-simultaneous Rabi-oscillation of the first trapped atom is induced by first light: (i) deflected, in the acousto-optical element, by the first non-simultaneous sound wave while no sound wave of the second frequency $f^2$ is generated in the acousto-optical element, and (ii) directed by the optical system to the first atom, the first calibrated value $a_1^1$ corresponding to a predetermined amplitude of the first light before the deflection in the acousto-optical element. Furthermore, the calibration method comprises a step of obtaining a second calibrated value $a_1^2$ of an amplitude of a second non-simultaneous sound wave of the second frequency $f^2$ at which a non-simultaneous Rabi-oscillation of the second trapped atom has a second predetermined frequency value $\Omega_1^2$, wherein the non-simultaneous Rabi-oscillation of the second trapped atom is induced by second light: (i) deflected, in the acousto-optical element, by the second non-simultaneous sound wave while no sound wave of the first frequency $f^1$ is generated in the acousto-optical element, and (ii) directed by the optical system to the second atom, the second calibrated value $a_1^2$ corresponding to a predetermined amplitude of the second light before the deflection in the acousto-optical element. Furthermore, the calibration method comprises a step of calculating a value $a_2^{1,2}$ for calibrating the amplitude of the simultaneous sound wave of the first frequency $f^1$ at which a simultaneous Rabi-oscillation of the first trapped atom has a third predetermined frequency value $\Omega_2^{1,2}$, wherein the simultaneous Rabi-oscillation of the first trapped atom is induced by third light deflected in the acousto-optical element by the simultaneous sound wave of the first frequency $f^1$ and directed by the optical system to the first atom, the value $a_2^{1,2}$ corresponds to a predetermined amplitude of the third light before the deflection in the acousto-optical element, and the value $a_2^{1,2}$ is calculated in accordance with a predetermined relation between the first calibrated value $a_1^1$, the second calibrated value $a_1^2$, and the value $a_2^{1,2}$.

According to a second aspect, provided in addition to the first aspect the simultaneous and the non-simultaneous Rabi-oscillation of the first trapped atom are between same states of the first trapped atom.

According to a third aspect provided in addition to the first or the second aspect, the calibration method includes calculating a value $a_2^{2,1}$ for calibrating an amplitude of the simultaneous sound wave of the second frequency $f^2$ at which a simultaneous Rabi-oscillation of the second trapped atom has a fourth predetermined frequency value $\Omega_2^{2,1}$, wherein the simultaneous Rabi-oscillation of the second trapped atom is induced by the third light deflected in the acousto-optical element by the simultaneous sound wave of the second frequency $f^2$ and directed by the optical system to the second atom, the value $a_2^{2,1}$ corresponds to the predetermined amplitude of the third light before the deflection in the acousto-optical element, and the value $a_2^{1,2}$ is calculated in accordance with a predetermined relation between the first calibrated value $a_1^1$, the second calibrated value $a_1^2$, and the value $a_2^{2,1}$.

According to a fourth aspect provided in addition to the third aspect, the simultaneous and the non-simultaneous Rabi-oscillation of the second trapped atom are between same states of the second trapped atom.

According to a fifth aspect, provided in addition to any of the first to the fourth aspect, $N$ is larger than 2, the optical system is configured, for each $1 \leq i \leq N$, to direct light, deflected in the acousto-optical element by a sound wave of a frequency $f^i$, to an j-th trapped atom among the $N$ trapped atoms. The calibration method according to the fifth aspect comprises, for each j-th trapped atom of the $N$ trapped atoms with $1 \leq i \leq N$: obtaining an j-th calibrated value $a_1^i$ of an amplitude of an $i$-th non-simultaneous sound wave of the $i$-th frequency $f^i$ at which a non-simultaneous Rabi-oscillation of the $i$-th trapped atom has an $i$-th predetermined frequency value $\Omega_1^i$, wherein the non-simultaneous Rabi-oscillation of the $i$-th trapped atom is induced by i-th light: (i) deflected, in the acousto-optical element, by the $i$-th non-simultaneous sound wave while no other sound wave is generated in the acousto-optical element, and (i) directed by the optical system to the $i$-th atom, the calibrated value $a_1^i$ corresponding to a predetermined amplitude of the $i$-th light before the deflection in the acousto-optical element. The calibration method according to the fifth aspect further comprises, for each pair of an $i$-th and an j-th trapped atom of the $N$ trapped atoms, with $1 \leq i \leq N, i < j \leq N$: (a) calculating a value $a_2^{i,j}$ for calibrating an amplitude of a $j$-simultaneous sound wave of the i-th frequency at which an $j$-simultaneous Rabi-oscillation of the j-th trapped atom has a predetermined frequency value $\Omega_2^{i,j}$, wherein (i) the $j$-simultaneous sound wave of the $i$-th frequency is to be generated, in the acousto-optical element, simultaneously with an $i$-simultaneous sound wave of the $j$-th frequency $f^j$, (ii) the $j$-simultaneous Rabi-oscillation of the $i$-th trapped atom is induced by light deflected in the acousto-optical element by the $j$-simultaneous sound wave sound wave of the $i$-th frequency and directed by the optical system to the $i$-th atom, (iii) the value $a_2^{i,j}$ corresponds to a predetermined amplitude of said light before the deflection in the acousto-optical element, and (iv) is calculated in accordance with a predetermined relation between the $i$-th calibrated value $a_1^i$, the $j$-th calibrated value $a_1^j$, and the value $a_2^{i,j}$; and/or (b) calculating a value $a_2^{j,i}$ for calibrating the amplitude of the $i$-simultaneous sound wave of the $j$-th frequency at which an $i$-simultaneous Rabi-oscillation of the $j$-th trapped atom has a predetermined frequency value $\Omega_2^{j,i}$, wherein (i) the $i$-simultaneous sound wave of the $j$-th frequency is to be generated, in the acousto-optical element, simultaneously with the $j$-simultaneous sound wave of the $i$-th frequency $f^i$, (ii) the $i$-simultaneous Rabi-oscillation of the $j$-th trapped atom is induced by light deflected in the acousto-optical element by the $i$-simultaneous sound wave sound wave of the $j$-th frequency and directed by the optical system to the $j$-th atom, (iii) the value $a_2^{i,j}$ corresponds to the predetermined amplitude of said light before the deflection in the acousto-optical element, and (iv) the value $a_2^{j,i}$ is calculated in accordance with a predetermined relation between the j-th calibrated value $a_1^i$, the j-th calibrated value $a_1^j$, and the value $a_2^{j,i}$.

According to a sixth aspect, provided in addition to any of the first to the fifth aspect: (i) the first calibrated value $a_1^1$ is obtained in accordance with a first measurement of a frequency of the non-simultaneous Rabi-oscillation of the first trapped atom, wherein, in the first measurement: the first light and the first non-simultaneous sound wave, deflecting the first light, have respective predetermined sample amplitudes; and/or (ii) the second calibrated value $a_1^2$ is obtained in accordance with a second measurement of a frequency of the non-simultaneous Rabi-oscillation of the second trapped atom, wherein, in the second measurement: the second light and the second non-simultaneous sound wave, deflecting the second light, have respective predetermined sample amplitudes.

According to a seventh aspect provided in addition to the sixth aspect: (i) the determining of the first calibrated value $a_1^1$ includes inputting the first light into the optical system, and measuring the non-simultaneous Rabi-oscillation of the first trapped atom; and/or (ii) the determining of the second calibrated value $a_1^2$ includes inputting the second light into the optical system, and measuring the non-simultaneous Rabi-oscillation of the second trapped atom.

According to an eighth aspect provided in addition to the sixth or the seventh aspect: (i) the first calibrated value $a_1^1$, at which the non-simultaneous Rabi-oscillation of the first trapped atom has the first predetermined frequency value $\Omega_1^1$, is obtained: (a) using the measured frequency of the non-simultaneous Rabi-oscillation of the first trapped atom, and (b) in accordance with a first predetermined exponent of a first power law relating values of the amplitude of the non-simultaneous sound wave of the first frequency $f^1$ with respectively corresponding frequency values of the non-simultaneous Rabi-oscillation of the first trapped atom; and/or (ii) the second calibrated value $a_1^2$, at which the non-simultaneous Rabi-oscillation of the second trapped atom has the second predetermined frequency value $\Omega_1^2$, is obtained: (a) using the measured frequency of the non-simultaneous Rabi-oscillation of the second trapped atom, and (b) in accordance with a second predetermined exponent of a second power law relating values of the amplitude of the non-simultaneous sound wave of the second frequency $f^2$ with respectively corresponding frequency values of the non-simultaneous Rabi-oscillation of the second trapped atom.

According to a ninth aspect, a quantum computation method for performing quantum computations on trapped atoms is provided. The quantum computation method comprises a step of performing, between quantum operations, calibrations of the optical system in accordance with the calibration method according any of the first to the eighth aspect. Furthermore, the quantum computation method comprises a step of performing the quantum operations, the quantum operations including single-qubit operations on the first trapped atom, single-qubit operations on the second trapped atom, and two-qubit operations on the first and the second trapped atom. More specifically: (i) the single-qubit operations on the first trapped atom are performed by (a) inputting, into the optical system light having a frequency of the first light, and (b) generating the first non-simultaneous sound wave with an amplitude that is in accordance with the calibrated value $a_1^1$ of the amplitude of the first non-simultaneous sound wave obtained in a previous calibration of the optical system; (ii) the single-qubit operations on the second trapped atom are performed by (a) inputting, into the optical system, light having a frequency of the second light, and (b) generating the second non-simultaneous sound wave with an amplitude that is in accordance with the calibrated value $a_1^2$ of the amplitude of the second non-simultaneous sound wave obtained in a previous calibration of the optical system, and (iii) the two-qubit operation is performed on the first and the second trapped atom by (a) inputting, into the optical system, light having two or more frequencies detuned from a frequency of the third light, and (b) generating, simultaneously, the simultaneous sound waves of the first and the second frequency with amplitudes that are respectively in accordance with the values $a_2^{1,2}$ and $a_2^{2,1}$ obtained in a previous calibration of the calibrations performed between quantum operations.

According to a tenth aspect provided in addition to the ninth aspect, the calibration method according to the seventh or the eighth aspect is performed between quantum operations, and the quantum computation comprises updating, between the quantum operations: (i) the predetermined relation based on measurements performed on the first and the second trapped atom, (ii) the first predetermined exponent based one or more measurements performed on the first trapped ion, and/or (iii) the second predetermined exponent based one or more measurements performed on the second trapped ion, wherein the updating of the predetermined relation, the first predetermined exponent, and/or the second predetermined exponent is performed less frequently than the calibration method.

According to a eleventh aspect a computer program is provided. The computer program comprises instructions which, when the program is executed by a computer, cause the computer to carry out the steps of the method according to any of the first to tenth aspect.

According to a twelfth aspect, a computer-readable storage medium is provided. The computer-readable storage medium comprises a computer program according to the eleventh aspect.

According to a thirteenth aspect, an apparatus is provided. The apparatus is for calibrating an amplitude of a simultaneous sound wave of a first frequency $f^1$ to be generated, in an acousto-optical element included in an optical system, simultaneously with a simultaneous sound wave of a second frequency $f^2$, wherein the optical system is configured to: (i) direct light, deflected in the acousto-optical element by a sound wave of the first frequency $f^1$, to a first trapped atom among $N \geq 2$ trapped atoms, and (ii) direct light, deflected in the acousto-optical element by a sound wave of the second frequency $f^2$, to a second trapped atom among the $N \geq 2$ trapped atoms. The apparatus comprises circuitry configured to obtain a first calibrated value $a_1^1$ of an amplitude of a first non-simultaneous sound wave of the first frequency $f^1$ at which a non-simultaneous Rabi-oscillation of the first trapped atom has a first predetermined frequency value $\Omega_1^1$, wherein the non-simultaneous Rabi-oscillation of the first trapped atom is induced by first light: (i) deflected, in the acousto-optical element, by the first non-simultaneous sound wave while no sound wave of the second frequency $f^2$ is generated in the acousto-optical element, and (ii) directed by the optical system to the first atom, the first calibrated value $a_1^1$ corresponding to a predetermined amplitude of the first light before the deflection in the acousto-optical element. Furthermore, the circuitry is configured to obtain a second calibrated value $a_1^2$ of an amplitude of a second non-simultaneous sound wave of the second frequency $f^2$ at which a non-simultaneous Rabi-oscillation of the second trapped atom has a second predetermined frequency value $\Omega_1^2$, wherein the non-simultaneous Rabi-oscillation of the second trapped atom is induced by second light: (i) deflected, in the acousto-optical element, by the second non-simultaneous sound wave while no sound wave of the first frequency $f^1$ is generated in the acousto-optical element, and (ii) directed by the optical system to the second atom, the second calibrated value $a_1^2$ corresponding to a predetermined amplitude of the second light before the deflection in the acousto-optical element. Furthermore, the circuitry is configured to calculate a value $a_2^{1,2}$ for calibrating the amplitude of the simultaneous sound wave of the first frequency $f^1$ at which a simultaneous Rabi-oscillation of the first trapped atom has a third predetermined frequency value $\Omega_2^{1,2}$, wherein the simultaneous Rabi-oscillation of the first trapped atom is induced by third light deflected in the acousto-optical element by the simultaneous sound wave of the first frequency $f^1$ and directed by the optical system to the first atom, the value $a_1^{1,2}$ corresponds to a predetermined amplitude of the third light before the deflection in the acousto-optical element, and the value $a_2^{1,2}$ is calculated in accordance with a predetermined relation between the first calibrated value $a_1^1$, the second calibrated value $a_1^2$, and the value $a_2^{1,2}$.

Summarizing, the present disclosure provides calibration methods for calibration of the amplitude of a simultaneous sound wave of a first frequency $f^1$ generated in an acousto-optical element (AOE) with another simultaneous sound wave of a second frequency $f^2$. The present disclosure also provides apparatuses configured to use such calibration methods to calibrate laser light, computer programs comprising instructions that cause a computer to perform such calibration methods, and computer-readable storage mediums comprising such computer programs.

In particular, a calibration method comprises obtaining a first calibrated amplitude value $a_1^1$ of a of a first non-simultaneous sound wave of the first frequency $f^1$ and a second calibrated amplitude value $a_1^2$ of a second non-simultaneous sound wave of the second frequency $f^2$. A value $a_2^{1,2}$ for calibrating the amplitude of the simultaneous sound wave of the first frequency $f^1$ is calculated in accordance with a predetermined relation between the first calibrated value $a_1^1$, the second calibrated value $a_1^2$, and the value $a_2^{1,2}$.

## Claims

1. A calibration method for calibrating an amplitude of a simultaneous sound wave of a first frequency $f^1$ to be generated, in an acousto-optical element included in an optical system, simultaneously with a simultaneous sound wave of a second frequency $f^2$, wherein

   the optical system is configured to:

- direct light, deflected in the acousto-optical element by a sound wave of the first frequency $f^1$, to a first trapped atom among $N \geq 2$ trapped atoms, and
- direct light, deflected in the acousto-optical element by a sound wave of the second frequency $f^2$, to a second trapped atom among the $N \geq 2$ trapped atoms;

the method comprising:

obtaining a first calibrated value $a_1^1$ of an amplitude of a first non-simultaneous sound wave of the first frequency $f^1$ at which a non-simultaneous Rabi-oscillation of the first trapped atom has a first predetermined frequency value $\Omega_1^1$, wherein
the non-simultaneous Rabi-oscillation of the first trapped atom is induced by first light:

- deflected, in the acousto-optical element, by the first non-simultaneous sound wave while no sound wave of the second frequency $f^2$ is generated in the acousto-optical element, and
- directed by the optical system to the first atom, and

the first calibrated value $a_1^1$ corresponds to a predetermined amplitude of the first light before the deflection in the acousto-optical element;

obtaining a second calibrated value $a_1^2$ of an amplitude of a second non-simultaneous sound wave of the second frequency $f^2$ at which a non-simultaneous Rabi-oscillation of the second trapped atom has a second predetermined frequency value $\Omega_1^2$, wherein the non-simultaneous Rabi-oscillation of the second trapped atom is induced by second light:

- deflected, in the acousto-optical element, by the second non-simultaneous sound wave while no sound wave of the first frequency $f^1$ is generated in the acousto-optical element, and
- directed by the optical system to the second atom, and

the second calibrated value $a_1^2$ corresponds to a predetermined amplitude of the second light before the deflection in the acousto-optical element; and

calculating a value $a_2^{1,2}$ for calibrating the amplitude of the simultaneous sound wave of the first frequency $f^1$ at which a simultaneous Rabi-oscillation of the first trapped atom has a third predetermined frequency value $\Omega_2^{1,2}$, wherein
the simultaneous Rabi-oscillation of the first trapped atom is induced by third light deflected in the acousto-optical element by the simultaneous sound wave of the first frequency $f^1$ and directed by the optical system to the first atom,

the value $a_2^{1,2}$ corresponds to a predetermined amplitude of the third light before the deflection in the acousto-optical element, and

the value $a_2^{1,2}$ is calculated in accordance with a predetermined relation between the first calibrated value $a_1^1$, the second calibrated value $a_1^2$, and the value $a_2^{1,2}$.

2. The calibration method according to claim 1, wherein
the simultaneous and the non-simultaneous Rabi-oscillation of the first trapped atom are between same states of the first trapped atom.

3. The calibration method according to claim 1 or 2, including

calculating a value $a_2^{2,1}$ for calibrating an amplitude of the simultaneous sound wave of the second frequency $f^2$ at which a simultaneous Rabi-oscillation of the second trapped atom has a fourth predetermined frequency

value $\Omega_2^{2,1}$, wherein

the simultaneous Rabi-oscillation of the second trapped atom is induced by the third light deflected in the acousto-optical element by the simultaneous sound wave of the second frequency $f^2$ and directed by the optical system to the second atom,

the value $a_2^{2,1}$ corresponds to the predetermined amplitude of the third light before the deflection in the acousto-optical element, and

the value $a_2^{1,2}$ is calculated in accordance with a predetermined relation between the first calibrated value $a_1^1$, the second calibrated value $a_1^2$, and the value $a_2^{2,1}$.

4. The calibration method according to claim 3, wherein
the simultaneous and the non-simultaneous Rabi-oscillation of the second trapped atom are between same states of the second trapped atom.

5. The calibration method according to any of claims 1 to 4, wherein
$N$ is larger than 2, the optical system is configured, for each $1 \leq i \leq N$, to direct light, deflected in the acousto-optical element by a sound wave of a frequency $f^i$, to an $i$-th trapped atom among the N trapped atoms, and the calibration method comprises:

for each $i$-th trapped atom of the $N$ trapped atoms with $1 \leq i \leq N$: obtaining an $i$-th calibrated value $a_1^i$ of an amplitude of an $i$-th non-simultaneous sound wave of the $i$-th frequency $f^i$ at which a non-simultaneous Rabi-oscillation of the $i$-th trapped atom has an $i$-th predetermined frequency value $\Omega_1^i$, wherein
the non-simultaneous Rabi-oscillation of the $i$-th trapped atom is induced by $i$-th light:

- deflected, in the acousto-optical element, by the $i$-th non-simultaneous sound wave while no other sound wave is generated in the acousto-optical element, and
- directed by the optical system to the $i$-th atom, and

the calibrated value $a_1^i$ corresponds to a predetermined amplitude of the $i$-th light before the deflection in the acousto-optical element; and
for each pair of an $i$-th and an $j$-th trapped atom of the $N$ trapped atoms, with $1 \leq i \leq N$, $< j \leq N$:

- calculating a value $a_2^{i,j}$ for calibrating an amplitude of a $j$-simultaneous sound wave of the $i$-th frequency at which an $j$-simultaneous Rabi-oscillation of the $i$-th trapped atom has a predetermined frequency value $\Omega_2^{i,j}$, wherein

  ∘ the $j$-simultaneous sound wave of the $i$-th frequency is to be generated, in the acousto-optical element, simultaneously with an $i$-simultaneous sound wave of the $j$-th frequency $f\,1$,
  ∘ the $j$-simultaneous Rabi-oscillation of the $i$-th trapped atom is induced by light deflected in the acousto-optical element by the $j$-simultaneous sound wave sound wave of the $i$-th frequency and directed by the optical system to the $i$-th atom,
  ∘ the value $a_2^{i,j}$ corresponds to a predetermined amplitude of said light before the deflection in the acousto-optical element, and
  ∘ is calculated in accordance with a predetermined relation between the $i$-th calibrated value $a_1^i$, the $j$-th calibrated value $a_1^j$, and the value $a_2^{i,j}$; and/or

- calculating a value $a_2^{j,i}$ for calibrating the amplitude of the $i$-simultaneous sound wave of the $j$-th frequency at which an $i$-simultaneous Rabi-oscillation of the $j$-th trapped atom has a predetermined frequency value

$\Omega_2^{j,i}$ , wherein

○ the $i$-simultaneous sound wave of the $j$-th frequency is to be generated, in the acousto-optical element, simultaneously with the $j$-simultaneous sound wave of the $i$-th frequency $f^i$,
○ the $i$-simultaneous Rabi-oscillation of the $j$-th trapped atom is induced by light deflected in the acousto-optical element by the $i$-simultaneous sound wave sound wave of the $j$-th frequency and directed by the optical system to the $j$-th atom,
○ the value $a_2^{i,j}$ corresponds to the predetermined amplitude of said light before the deflection in the acousto-optical element, and
○ the value $a_2^{j,i}$ is calculated in accordance with a predetermined relation between the i-th calibrated value $a_1^i$ , the $j$-th calibrated value $a_1^j$ , and the value $a_2^{j,i}$ .

6. The calibration method according to any of claims 1 to 5, wherein

the first calibrated value $a_1^1$ is obtained in accordance with a first measurement of a frequency of the non-simultaneous Rabi-oscillation of the first trapped atom, wherein, in the first measurement: the first light and the first non-simultaneous sound wave, deflecting the first light, have respective predetermined sample amplitudes; and/or

the second calibrated value $a_1^2$ is obtained in accordance with a second measurement of a frequency of the non-simultaneous Rabi-oscillation of the second trapped atom, wherein, in the second measurement: the second light and the second non-simultaneous sound wave, deflecting the second light, have respective predetermined sample amplitudes.

7. The calibration method according to claim 6, wherein

the determining of the first calibrated value $a_1^1$ includes:

- inputting the first light into the optical system, and
- measuring the non-simultaneous Rabi-oscillation of the first trapped atom; and/or

the determining of the second calibrated value $a_1^2$ includes:

- inputting the second light into the optical system, and
- measuring the non-simultaneous Rabi-oscillation of the second trapped atom.

8. The calibration method according to claim 6 or 7, wherein,

the first calibrated value $a_1^1$ , at which the non-simultaneous Rabi-oscillation of the first trapped atom has the first predetermined frequency value $\Omega_1^1$ , is obtained:

- using the measured frequency of the non-simultaneous Rabi-oscillation of the first trapped atom, and
- in accordance with a first predetermined exponent of a first power law relating values of the amplitude of the non-simultaneous sound wave of the first frequency $f^1$ with respectively corresponding frequency values of the non-simultaneous Rabi-oscillation of the first trapped atom; and/or

the second calibrated value $a_1^2$ , at which the non-simultaneous Rabi-oscillation of the second trapped atom has the second predetermined frequency value $\Omega_1^2$ , is obtained:

- using the measured frequency of the non-simultaneous Rabi-oscillation of the second trapped atom, and
- in accordance with a second predetermined exponent of a second power law relating values of the amplitude of the non-simultaneous sound wave of the second frequency $f^2$ with respectively corresponding frequency values of the non-simultaneous Rabi-oscillation of the second trapped atom.

9. A quantum computation method for performing quantum computations on trapped atoms, the method comprising:

performing, between quantum operations, calibrations of the optical system in accordance with the calibration method according any of claims 1 to 8; and
performing the quantum operations, the quantum operations including single-qubit operations on the first trapped atom, single-qubit operations on the second trapped atom, and two-qubit operations on the first and the second trapped atom, wherein
the single-qubit operations on the first trapped atom are performed by:

- inputting, into the optical system light having a frequency of the first light, and
- generating the first non-simultaneous sound wave with an amplitude that is in accordance with the calibrated value $a_1^1$ of the amplitude of the first non-simultaneous sound wave obtained in a previous calibration of the optical system,

the single-qubit operations on the second trapped atom are performed by:

- inputting, into the optical system, light having a frequency of the second light, and
- generating the second non-simultaneous sound wave with an amplitude that is in accordance with the calibrated value $a_1^2$ of the amplitude of the second non-simultaneous sound wave obtained in a previous calibration of the optical system, and

the two-qubit operation is performed on the first and the second trapped atom by:

- inputting, into the optical system, light having two or more frequencies detuned from a frequency of the third light, and
- generating, simultaneously, the simultaneous sound waves of the first and the second frequency with amplitudes that are respectively in accordance with the values $a_2^{1,2}$ and $a_2^{2,1}$ obtained in a previous calibration of the calibrations performed between quantum operations.

10. The quantum computation method according to claim 9, wherein
the calibration method according to claim 7 or 8 is performed between quantum operations, and the quantum computation method comprises:

updating, between the quantum operations:

- the predetermined relation based on measurements performed on the first and the second trapped atom,
- the first predetermined exponent based one or more measurements performed on the first trapped ion, and/or
- the second predetermined exponent based one or more measurements performed on the second trapped ion, wherein

the updating of the predetermined relation, the first predetermined exponent, and/or the second predetermined exponent is performed less frequently than the calibration method.

11. A computer program comprising instructions which, when the program is executed by a computer, cause the computer to carry out the steps of the method of any of claims 1 to 10.

12. A computer-readable storage medium comprising the computer program according to claim 11.

13. An apparatus for calibrating an amplitude of a simultaneous sound wave of a first frequency $f^1$ to be generated, in an acousto-optical element included in an optical system, simultaneously with a simultaneous sound wave of a

second frequency $f^2$, wherein

the optical system is configured to:

- direct light, deflected in the acousto-optical element by a sound wave of the first frequency $f^1$, to a first trapped atom among $N \geq 2$ trapped atoms, and
- direct light, deflected in the acousto-optical element by a sound wave of the second frequency $f^2$, to a second trapped atom among the $N \geq 2$ trapped atoms;

the apparatus comprising circuitry configured to:

obtain a first calibrated value $a_1^1$ of an amplitude of a first non-simultaneous sound wave of the first frequency $f^1$ at which a non-simultaneous Rabi-oscillation of the first trapped atom has a first predetermined frequency value $\Omega_1^1$, wherein
the non-simultaneous Rabi-oscillation of the first trapped atom is induced by first light:

- deflected, in the acousto-optical element, by the first non-simultaneous sound wave while no sound wave of the second frequency $f^2$ is generated in the acousto-optical element, and
- directed by the optical system to the first atom, and

the first calibrated value $a_1^1$ corresponds to a predetermined amplitude of the first light before the deflection in the acousto-optical element;

obtain a second calibrated value $a_1^2$ of an amplitude of a second non-simultaneous sound wave of the second frequency $f^2$ at which a non-simultaneous Rabi-oscillation of the second trapped atom has a second predetermined frequency value $\Omega_1^2$, wherein the non-simultaneous Rabi-oscillation of the second trapped atom is induced by second light:

- deflected, in the acousto-optical element, by the second non-simultaneous sound wave while no sound wave of the first frequency $f^1$ is generated in the acousto-optical element, and
- directed by the optical system to the second atom, and

the second calibrated value $a_1^2$ corresponds to a predetermined amplitude of the second light before the deflection in the acousto-optical element; and

calculate a value $a_2^{1,2}$ for calibrating the amplitude of the simultaneous sound wave of the first frequency $f^1$ at which a simultaneous Rabi-oscillation of the first trapped atom has a third predetermined frequency value $\Omega_2^{1,2}$, wherein
the simultaneous Rabi-oscillation of the first trapped atom is induced by third light deflected in the acousto-optical element by the simultaneous sound wave of the first frequency $f^1$ and directed by the optical system to the first atom,

the value $a_1^{1,2}$ corresponds to a predetermined amplitude of the third light before the deflection in the acousto-optical element, and

the value $a_2^{1,2}$ is calculated in accordance with a predetermined relation between the first calibrated value $a_1^1$, the second calibrated value $a_1^2$, and the value $a_2^{1,2}$.

**Amended claims in accordance with Rule 137(2) EPC.**

1. A calibration method for calibrating an amplitude of a simultaneous sound wave of a first frequency $f^1$ to be generated, in an acousto-optical element included in an optical system (340), simultaneously with a simultaneous sound wave of a second frequency $f^2$, wherein

the optical system (340) is configured to:

- direct light, deflected in the acousto-optical element by a sound wave of the first frequency $f^1$, to a first trapped atom among $N \geq 2$ trapped atoms, and
- direct light, deflected in the acousto-optical element by a sound wave of the second frequency $f^2$, to a second trapped atom among the $N \geq 2$ trapped atoms;

the method comprising:

obtaining (S140) a first calibrated value $a_1^1$ of an amplitude of a first non-simultaneous sound wave of the first frequency $f^1$ at which a non-simultaneous Rabi-oscillation of the first trapped atom has a first predetermined frequency value $\Omega_1^1$, wherein
the non-simultaneous Rabi-oscillation of the first trapped atom is induced by first light (380):

- deflected, in the acousto-optical element, by the first non-simultaneous sound wave while no sound wave of the second frequency $f^2$ is generated in the acousto-optical element, and
- directed by the optical system (340) to the first atom, and

the first calibrated value $a_1^1$ corresponds to a predetermined amplitude of the first light (300) before the deflection in the acousto-optical element;

obtaining (S140) a second calibrated value $a_1^2$ of an amplitude of a second non-simultaneous sound wave of the second frequency $f^2$ at which a non-simultaneous Rabi-oscillation of the second trapped atom has a second predetermined frequency value $\Omega_1^2$, wherein the non-simultaneous Rabi-oscillation of the second trapped atom is induced by second light (380):

- deflected, in the acousto-optical element, by the second non-simultaneous sound wave while no sound wave of the first frequency $f^1$ is generated in the acousto-optical element, and
- directed by the optical system (340) to the second atom, and

the second calibrated value $a_1^2$ corresponds to a predetermined amplitude of the second light (300) before the deflection in the acousto-optical element; and

calculating (S160) a value $a_2^{1,2}$ for calibrating the amplitude of the simultaneous sound wave of the first frequency $f^1$ at which a simultaneous Rabi-oscillation of the first trapped atom has a third predetermined frequency value $\Omega_2^{1,2}$, wherein
the simultaneous Rabi-oscillation of the first trapped atom is induced by third light deflected in the acousto-optical element by the simultaneous sound wave of the first frequency $f^1$ and directed by the optical system (340) to the first atom,

the value $a_2^{1,2}$ corresponds to a predetermined amplitude of the third light before the deflection in the acousto-optical element, and

the value $a_2^{1,2}$ is calculated (S160) in accordance with a predetermined relation between the first calibrated value $a_1^1$, the second calibrated value $a_1^2$, and the value $a_2^{1,2}$.

2. The calibration method according to claim 1, wherein
the simultaneous and the non-simultaneous Rabi-oscillation of the first trapped atom are between same states of the first trapped atom.

3. The calibration method according to claim 1 or 2, including

calculating a value $a_2^{2,1}$ for calibrating an amplitude of the simultaneous sound wave of the second frequency $f^2$ at which a simultaneous Rabi-oscillation of the second trapped atom has a fourth predetermined frequency value $\Omega_2^{2,1}$, wherein

the simultaneous Rabi-oscillation of the second trapped atom is induced by the third light deflected in the acousto-optical element by the simultaneous sound wave of the second frequency $f^2$ and directed by the optical system (340) to the second atom,

the value $a_2^{1,2}$ corresponds to the predetermined amplitude of the third light before the deflection in the acousto-optical element, and

the value $a_2^{1,2}$ is calculated in accordance with a predetermined relation between the first calibrated value $a_1^1$, the second calibrated value $a_1^2$, and the value $a_2^{2,1}$.

4. The calibration method according to claim 3, wherein
the simultaneous and the non-simultaneous Rabi-oscillation of the second trapped atom are between same states of the second trapped atom.

5. The calibration method according to any of claims 1 to 4, wherein
$N$ is larger than 2, the optical system (340) is configured, for each $1 \leq i \leq N$, to direct light, deflected in the acousto-optical element by a sound wave of a frequency $f^i$, to an $i$-th trapped atom among the $N$ trapped atoms, and the calibration method comprises:

for each j-th trapped atom of the $N$ trapped atoms with $1 \leq i \leq N$: obtaining an $i$-th calibrated value $a_1^i$ of an amplitude of an $i$-th non-simultaneous sound wave of the $i$-th frequency $f^i$ at which a non-simultaneous Rabi-oscillation of the $i$-th trapped atom has an $i$-th predetermined frequency value $\Omega_1^i$, wherein
the non-simultaneous Rabi-oscillation of the $i$-th trapped atom is induced by $i$-th light:

- deflected, in the acousto-optical element, by the $i$-th non-simultaneous sound wave while no other sound wave is generated in the acousto-optical element, and
- directed by the optical system (340) to the $i$-th atom, and

the calibrated value $a_1^i$ corresponds to a predetermined amplitude of the $i$-th light before the deflection in the acousto-optical element; and
for each pair of an $i$-th and an $j$-th trapped atom of the $N$ trapped atoms, with $1 \leq i \leq N, i < j \leq N$:

- calculating a value $a_2^{i,j}$ for calibrating an amplitude of a $j$-simultaneous sound wave of the $i$-th frequency at which an $j$-simultaneous Rabi-oscillation of the $i$-th trapped atom has a predetermined frequency value $\Omega_2^{i,j}$, wherein

  ∘ the $j$-simultaneous sound wave of the $i$-th frequency is to be generated, in the acousto-optical element, simultaneously with an $i$-simultaneous sound wave of the $j$-th frequency $f^i$,
  ∘ the $j$-simultaneous Rabi-oscillation of the $i$-th trapped atom is induced by light deflected in the acousto-optical element by the $j$-simultaneous sound wave sound wave of the $i$-th frequency and directed by the optical system (340) to the $i$-th atom,
  ∘ the value $a_2^{i,j}$ corresponds to a predetermined amplitude of said light before the deflection in the acousto-optical element, and

  ∘ is calculated in accordance with a predetermined relation between the $i$-th calibrated value $a_1^i$, the $j$-th calibrated value $a_1^j$, and the value $a_2^{i,j}$; and/or

- calculating a value $a_2^{j,i}$ for calibrating the amplitude of the *i*-simultaneous sound wave of the *j*-th frequency at which an *i*-simultaneous Rabi-oscillation of the *j*-th trapped atom has a predetermined frequency value $\Omega_2^{j,i}$, wherein

  ○ the *i*-simultaneous sound wave of the *j*-th frequency is to be generated, in the acousto-optical element, simultaneously with the *j*-simultaneous sound wave of the *i*-th frequency $f^i$,
  ○ the *i*-simultaneous Rabi-oscillation of the *j*-th trapped atom is induced by light deflected in the acousto-optical element by the *i*-simultaneous sound wave sound wave of the *j*-th frequency and directed by the optical system (340) to the *j*-th atom,

  ○ the value $a_2^{i,j}$ corresponds to the predetermined amplitude of said light before the deflection in the acousto-optical element, and

  ○ the value $a_2^{j,i}$ is calculated in accordance with a predetermined relation between the *i*-th calibrated value $a_1^i$, the *j*-th calibrated value $a_1^j$, and the value $a_2^{j,i}$.

6. The calibration method according to any of claims 1 to 5, wherein

   the first calibrated value $a_1^1$ is obtained in accordance with a first measurement of a frequency of the non-simultaneous Rabi-oscillation of the first trapped atom, wherein, in the first measurement: the first light (300) and the first non-simultaneous sound wave, deflecting the first light (300), have respective predetermined sample amplitudes;

   and/or the second calibrated value $a_1^2$ is obtained in accordance with a second measurement of a frequency of the non-simultaneous Rabi-oscillation of the second trapped atom, wherein, in the second measurement: the second light (300) and the second non-simultaneous sound wave, deflecting the second light (300), have respective predetermined sample amplitudes.

7. The calibration method according to claim 6, wherein

   the determining of the first calibrated value $a_1^1$ includes:

   - inputting the first light (300) into the optical system (340), and
   - measuring the non-simultaneous Rabi-oscillation of the first trapped atom; and/or

   the determining of the second calibrated value $a_1^2$ includes:

   - inputting the second light (300) into the optical system (340), and
   - measuring the non-simultaneous Rabi-oscillation of the second trapped atom.

8. The calibration method according to claim 6 or 7, wherein,

   the first calibrated value $a_1^1$, at which the non-simultaneous Rabi-oscillation of the first trapped atom has the first predetermined frequency value $\Omega_1^1$, is obtained:

   - using the measured frequency of the non-simultaneous Rabi-oscillation of the first trapped atom, and
   - in accordance with a first predetermined exponent of a first power law relating values of the amplitude of the non-simultaneous sound wave of the first frequency $f^1$ with respectively corresponding frequency values of the non-simultaneous Rabi-oscillation of the first trapped atom; and/or

   the second calibrated value $a_1^2$, at which the non-simultaneous Rabi-oscillation of the second trapped atom has the second predetermined frequency value $\Omega_1^2$, is obtained:

- using the measured frequency of the non-simultaneous Rabi-oscillation of the second trapped atom, and
- in accordance with a second predetermined exponent of a second power law relating values of the amplitude of the non-simultaneous sound wave of the second frequency $f^2$ with respectively corresponding frequency values of the non-simultaneous Rabi-oscillation of the second trapped atom.

9. A quantum computation method for performing quantum computations on trapped atoms, the method comprising:

performing, between quantum operations, calibrations of the optical system (340) in accordance with the calibration method according any of claims 1 to 8; and
performing the quantum operations, the quantum operations including single-qubit operations on the first trapped atom, single-qubit operations on the second trapped atom, and two-qubit operations on the first and the second trapped atom, wherein
the single-qubit operations on the first trapped atom are performed by:

- inputting, into the optical system (340) light having a frequency of the first light (300), and
- generating the first non-simultaneous sound wave with an amplitude that is in accordance with the calibrated value $a_1^1$ of the amplitude of the first non-simultaneous sound wave obtained in a previous calibration of the optical system (340),

the single-qubit operations on the second trapped atom are performed by:

- inputting, into the optical system (340), light having a frequency of the second light, and
- generating the second non-simultaneous sound wave with an amplitude that is in accordance with the calibrated value $a_1^2$ of the amplitude of the second non-simultaneous sound wave obtained in a previous calibration of the optical system (340), and

the two-qubit operation is performed on the first and the second trapped atom by:

- inputting, into the optical system (340), light having two or more frequencies detuned from a frequency of the third light, and
- generating, simultaneously, the simultaneous sound waves of the first and the second frequency with amplitudes that are respectively in accordance with the values $a_2^{1,2}$ and $a_2^{2,1}$ obtained in a previous calibration of the calibrations performed between quantum operations.

10. The quantum computation method according to claim 9, wherein
the calibration method according to claim 7 or 8 is performed between quantum operations, and the quantum computation method comprises:

updating, between the quantum operations:

- the predetermined relation based on measurements performed on the first and the second trapped atom,
- the first predetermined exponent based one or more measurements performed on the first trapped ion, and/or
- the second predetermined exponent based one or more measurements performed on the second trapped ion, wherein

the updating of the predetermined relation, the first predetermined exponent, and/or the second predetermined exponent is performed less frequently than the calibration method.

11. A computer program comprising instructions which, when the program is executed by a computer, cause the computer to carry out the steps of the method of any of claims 1 to 10.

12. A computer-readable storage medium comprising the computer program according to claim 11.

**13.** An apparatus for calibrating an amplitude of a simultaneous sound wave of a first frequency $f^1$ to be generated, in an acousto-optical element included in an optical system (340), simultaneously with a simultaneous sound wave of a second frequency $f^2$, wherein

the optical system (340) is configured to:

- direct light, deflected in the acousto-optical element by a sound wave of the first frequency $f^1$, to a first trapped atom among $N \geq 2$ trapped atoms, and
- direct light, deflected in the acousto-optical element by a sound wave of the second frequency $f^2$, to a second trapped atom among the $N \geq 2$ trapped atoms;

the apparatus comprising circuitry configured to:

obtain a first calibrated value $a_1^1$ of an amplitude of a first non-simultaneous sound wave of the first frequency $f^1$ at which a non-simultaneous Rabi-oscillation of the first trapped atom has a first predetermined frequency value $\Omega_1^1$, wherein
the non-simultaneous Rabi-oscillation of the first trapped atom is induced by first light (380):

- deflected, in the acousto-optical element, by the first non-simultaneous sound wave while no sound wave of the second frequency $f^2$ is generated in the acousto-optical element, and
- directed by the optical system (340) to the first atom, and

the first calibrated value $a_1^1$ corresponds to a predetermined amplitude of the first light (300) before the deflection in the acousto-optical element;

obtain a second calibrated value $a_1^2$ of an amplitude of a second non-simultaneous sound wave of the second frequency $f^2$ at which a non-simultaneous Rabi-oscillation of the second trapped atom has a second predetermined frequency value $\Omega_1^2$, wherein the non-simultaneous Rabi-oscillation of the second trapped atom is induced by second light (380):

- deflected, in the acousto-optical element, by the second non-simultaneous sound wave while no sound wave of the first frequency $f^1$ is generated in the acousto-optical element, and
- directed by the optical system (340) to the second atom, and

the second calibrated value $a_1^2$ corresponds to a predetermined amplitude of the second light (300) before the deflection in the acousto-optical element; and

calculate a value $a_2^{1,2}$ for calibrating the amplitude of the simultaneous sound wave of the first frequency $f^1$ at which a simultaneous Rabi-oscillation of the first trapped atom has a third predetermined frequency value $\Omega_2^{1,2}$, wherein
the simultaneous Rabi-oscillation of the first trapped atom is induced by third light deflected in the acousto-optical element by the simultaneous sound wave of the first frequency $f^1$ and directed by the optical system (340) to the first atom,

the value $a_1^{1,2}$ corresponds to a predetermined amplitude of the third light before the deflection in the acousto-optical element, and

the value $a_2^{1,2}$ is calculated in accordance with a predetermined relation between the first calibrated value $a_1^1$, the second calibrated value $a_1^2$, and the value $a_2^{1,2}$.

S140: obtain calibrated single-ion amplitudes

↓

S160: use the calibrated single-ion amplitudes to calculate calibrated two-ion amplitude(s)

**Fig. 1**

<u>200</u>　　　　　201

| Memory 210 | ⟷ | Interface 230 |
| Circuitry 215 | ⟷ | Transceiver 240 |

**Fig. 2**

$\{f^i, a^i\}$

380

$I^i(a^i, f^i)$

300

$\theta^i(f^i)$

－－－－－－－－－－－ Optical Axis

Addressing Unit 340

**Fig. 3**

**Fig. 4**

400

Objective 480

AOD 460

490

450

4f relay 440

AOD 420

430

410

**Fig. 5**

$+f^2$

$-f^1$

$-f^2$

$+f^1$

$I^1$

$I^2$

**Fig. 6**

$\{f^1, a^1\}$

Principal Plane     Focal Plane

681

$\omega_L^1 = \omega_L$

$\omega_L = \omega_0$

$I^1(a_1^1, f^1) \approx I^1(a_1^1)$

300

Optical Axis

Addressing unit 340     Objective

**Fig. 7**

$\{f^1, a_2^{1,2}\}$
$\{f^2, a_2^{2,1}\}$

Principal Plane     Focal Plane

781

$\omega_L^1 = \omega_L$

782

$\omega_L = \omega_0$

$\omega_L^2 = \omega_L$

$I^1\left(a_2^{1,2}, f^1, a_2^{2,1}, f^2\right)$

$I^2\left(a_2^{1,2}, f^2, a_2^{2,1}, f^1\right)$

Optical Axis

300

Addressing unit 340     Objective

**Fig. 8**

**Fig. 9**

**Fig. 10**

**Fig. 11**

S1100: Calibrate addressing

S1101: Vertical alignment → S1102: Horizontal alignment

S1110: Calibrate frequencies

S1111: Transition frequency → S1112: Motional frequency

S1120: Calibrate laser-ion couplings

1-qubit Rabi times

S1130: Set 2-qubit gate parameters

S1131: Choose a gate detuning → S1132: Calculate 2-qubit parameters using coupling matrix

S1140: Calibrate 2-qubit gates

S1145: Implement N-1 2-qubit gates

S1160: Calibrate 2-qubit gate parameters

S1161: Calibrate global MS gate power → S1162: Calibrate third tone power

Is fidelity above threshold?

No

Yes

OK

# EUROPEAN SEARCH REPORT

Europäisches Patentamt
European Patent Office
Office européen des brevets

**Application Number**

EP 23 17 1575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/293293 A1 (CONTRERAS ALEXANDER KEESLING [US] ET AL) 15 September 2022 (2022-09-15) * paragraph [0083] – paragraph [0087] * * paragraph [0106] * * paragraph [0108] – paragraph [0110] * * paragraph [0170] * * figure 1E * | 1-13 | INV. G02F1/11 G02F1/33 |
| Y | Harte Tiffany Laura: "Ultracold atoms in dressed potentials", , 4 June 2018 (2018-06-04), XP093087586, University of Oxford Retrieved from the Internet: URL:https://www2.physics.ox.ac.uk/sites/default/files/page/2013/01/19/thesis-main-library-42857.pdf [retrieved on 2023-10-02] * Chapter 3; page 45 * | 1-13 | |
| A | Anonymous: "Rabi cycle – Wikipedia", , 3 May 2023 (2023-05-03), XP093087528, Retrieved from the Internet: URL:https://en.wikipedia.org/w/index.php?title=Rabi_cycle&oldid=1152960876 [retrieved on 2023-09-29] * the whole document * | 1-13 | **TECHNICAL FIELDS SEARCHED (IPC)** G02F |
| A | US 2019/086696 A1 (MRAWEK PATRIC [DE] ET AL) 21 March 2019 (2019-03-21) * paragraph [0034] * * paragraph [0043] * * figures 2, 3 * | 1-13 | |

-/--

The present search report has been drawn up for all claims

| Place of search | Date of completion of the search | Examiner |
|---|---|---|
| The Hague | 2 October 2023 | Votini, Stefano |

EPO FORM 1503 03.82 (P04C01)

page 1 of 4

Europäisches
Patentamt

European
Patent Office

Office européen
des brevets

# EUROPEAN SEARCH REPORT

Application Number

EP 23 17 1575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/036559 A1 (GOLDMAN MICHAEL LURIE [US] ET AL) 2 February 2023 (2023-02-02) * paragraph [0045] – paragraph [0046] * * paragraph [0169] – paragraph [0171] * * paragraph [0222] * * figure 1 * | 1-13 | |
| A | NEUMAN KEIR ET AL: "Optical trapping", REVIEW OF SCIENTIFIC INSTRUMENTS, AMERICAN INSTITUTE OF PHYSICS, 2 HUNTINGTON QUADRANGLE, MELVILLE, NY 11747, vol. 75, no. 9, 2 September 2004 (2004-09-02), pages 2787-2809, XP012072011, ISSN: 0034-6748, DOI: 10.1063/1.1785844 * figure 2 * * Section II; page 2787 – page 2788 * | 1-13 | |
| A | IVAN POGORELOV ET AL: "A compact ion-trap quantum computing demonstrator", ARXIV.ORG, 7 June 2021 (2021-06-07), XP081928947, * Section D. Single ION addressing performance; page 14 * | 1-13 | TECHNICAL FIELDS SEARCHED (IPC) |

-/--

The present search report has been drawn up for all claims

| Place of search | Date of completion of the search | Examiner |
|---|---|---|
| The Hague | 2 October 2023 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 17 1575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Levine Harry Jay: "Quantum Information Processing and Quantum Simulation with Programmable Rydberg Atom Arrays", PhD Thesis, 30 April 2021 (2021-04-30), XP093066586, Retrieved from the Internet: URL:https://dash.harvard.edu/handle/1/37368420 [retrieved on 2023-07-24] * figure 2.1 * * Experimental Method; page 9 – page 22 * | 1-13 | |
| A | GILLEN-CHRISTANDL KATHARINA ET AL: "Comparison of Gaussian and super Gaussian laser beams for addressing atomic qubits", APPLIED PHYSICS B, SPRINGER BERLIN HEIDELBERG, BERLIN/HEIDELBERG, vol. 122, no. 5, 28 April 2016 (2016-04-28), pages 1-20, XP035675923, ISSN: 0946-2171, DOI: 10.1007/S00340-016-6407-Y [retrieved on 2016-04-28] * 2.2 * | 1-13 | |

TECHNICAL FIELDS SEARCHED (IPC)

_/__

The present search report has been drawn up for all claims

| Place of search | Date of completion of the search | Examiner |
|---|---|---|
| The Hague | 2 October 2023 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 23 17 1575**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Sangta Kim: "Acousto-Optic Devices for Optical Signal Processing and Quantum Computing", , 13 February 2014 (2014-02-13), pages 1-261, XP093087539, Retrieved from the Internet: URL:https://www.researchgate.net/profile/Sangtaek_Kim/publication/234799492_Acousto-optic_devices_for_optical_signal_processing_and_quantum_computing/links/0c96052fd499bb9f15000000/Acousto-optic-devices-for-optical-signal-processing-and-quantum-computing.pdf [retrieved on 2023-09-30] * Chapter 6; page 120 - page 123 * * figure 6.1 * | 1-13 | |

----

TECHNICAL FIELDS SEARCHED (IPC)

The present search report has been drawn up for all claims

| Place of search | Date of completion of the search | Examiner |
|---|---|---|
| The Hague | 2 October 2023 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 1575

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2023

| Patent document cited in search report | Publication date | Patent family member(s) | Publication date |
|---|---|---|---|
| US 2022293293 A1 | 15-09-2022 | AU 2018300240 A1 | 27-02-2020 |
| | | CA 3102913 A1 | 17-01-2019 |
| | | CN 112041263 A | 04-12-2020 |
| | | EP 3652106 A1 | 20-05-2020 |
| | | IL 272117 A | 31-03-2020 |
| | | JP 7189579 B2 | 14-12-2022 |
| | | JP 2020528357 A | 24-09-2020 |
| | | KR 20200052875 A | 15-05-2020 |
| | | MA 49717 A | 20-05-2020 |
| | | SG 11202001159S A | 30-03-2020 |
| | | US 2020185120 A1 | 11-06-2020 |
| | | US 2022293293 A1 | 15-09-2022 |
| | | WO 2019014589 A1 | 17-01-2019 |
| US 2019086696 A1 | 21-03-2019 | DE 102017121926 A1 | 21-03-2019 |
| | | EP 3460563 A1 | 27-03-2019 |
| | | JP 2019056909 A | 11-04-2019 |
| | | US 2019086696 A1 | 21-03-2019 |
| US 2023036559 A1 | 02-02-2023 | US 2023013783 A1 | 19-01-2023 |
| | | US 2023018526 A1 | 19-01-2023 |
| | | US 2023036559 A1 | 02-02-2023 |

EPO FORM P0459

For more details about this annex : see Official Journal of the European Patent Office, No. 12/82